# EUROPÄISCHE PATENTSCHRIFT

(11) **EP 3 983 453 B1**
(45) Veröffentlichungstag und Bekanntmachung des Hinweises auf die Patenterteilung: **23.04.2025**
(21) Anmeldenummer: 20728068.6
(22) Anmeldetag: 28.05.2020
(51) Int. Cl.: C08F 12/08, C08F 36/06, C08F 257/02, C09D 109/06, C09D 125/10

(54) **VERFAHREN ZUR HERSTELLUNG EINER WÄSSRIGEN POLYMERDISPERSION AUS VINYLAROMATISCHER VERBINDUNG UND KONJUGIERTEM ALIPHATISCHEN DIEN**
METHOD FOR PRODUCING AN AQUEOUS POLYMER DISPERSION FROM A VINYL AROMATIC COMPOUND AND A CONJUGATED ALIPHATIC DIENE
PROCÉDÉ DE PRÉPARATION D'UNE DISPERSION POLYMÈRE AQUEUSE À PARTIR D'UN COMPOSÉ VINYLAROMATIQUE ET D'UN DIÈNE ALIPHATIQUE CONJUGUÉ

(30) Priorität: 12.06.2019 EP 19179680
(43) Veröffentlichungstag der Anmeldung: 20.04.2022
(73) Patentinhaber: BASF SE, 67056 Ludwigshafen am Rhein (DE)
(72) Erfinder: CIMPEANU, Carmen-Elena, 67056 Ludwigshafen (DE); LAWRENZ, Dirk, 67454 Hassloch (DE)
(74) Vertreter: BASF IP Association
(86) Internationale Anmeldenummer: PCT/EP2020/064897
(87) Internationale Veröffentlichungsnummer: WO 2020/249406

(56) Entgegenhaltungen:
- EP-A1- 0 926 160
- EP-A1- 2 197 925
- US-A1- 2011 305 916

## Beschreibung

Die Erfindung betrifft ein Verfahren zur Herstellung einer wässrigen Polymerdispersion, die eine polymodale Teilchenverteilung der Polymerteilchen aufweist, indem eine vinylaromatische Verbindung und ein konjugiertes aliphatisches Dien copolymerisiert werden. Die Erfindung betrifft auch die nach dem Verfahren hergestellten wässrigen Polymerdispersionen und deren Verwendung als Bindemittel, Klebstoff, Schlichtemittel für Fasern, zur Herstellung von Überzügen oder zur Herstellung einer Papierstreichmasse.

Bindemittel für Papierstreichmassen auf Basis von Copolymeren aus vinylaromatischen Verbindungen und aliphatischen Dienen werden oftmals für Anwendungen wie etwa Karton für die Verpackung von Lebensmitteln gewählt. Dabei wird ein Fokus bei ihrer Herstellung auf geruchsarme Dispersionen gelegt, da es sich hier um ein geruchssensibles Anwendungsgebiet handelt.

Durch immer weitere Steigerung der Produktionsgeschwindigkeit der Papiermaschinen steigen jedoch auch die Anforderungen an die Rheologie der Streichmasse. Trotz des hohen Anteils von Pigment, das ja gröber als das Bindemittelpolymer ist, hat letzteres einen starken Einfluss auf die Rheologie einer Streichmasse. Die Viskosität der Streichmasse ließe sich durch größere Verdünnung herabsetzen, doch gerade das Gegenteil wird gewünscht. Somit sollen moderne Dispersionen einen hohen Feststoffgehalt der Streichmasse ermöglichen, die dennoch selbst bei hohen Geschwindigkeiten eine geringe Viskosität aufweisen.

Peter C. Hayes beschreibt, dass bei hohen Feststoffgehalten von Streichmassen mit Styrol-Butadien-Bindemittel das Laufverhalten durch kleiner Teilchengrößen des Bindemittels verbessert wird (*"*Styrene-butadiene and styrene-acrylic latexes in paper coating applications", Coating Material: Pigment Binders & Additives Short Course, Orange Beach, AL, United States, Mar. 11-13, 2002, Seiten 115-123, TAPPI PRESS, Atlanta, 2002).

Eine Möglichkeit der Steuerung der Teilchengröße einer Polymerdispersion gelingt durch die Verwendung eines Saatlatex. Die auf diesem Wege hergestellten monomodalen Dispersionen bilden jedoch einen hohen Anteil an Feinkoagulat, welches sich im Laufe der Zeit zu größeren Aggregaten zusammenballt, Filtersysteme blockiert und für die Verwendung im Papierstrich untauglich wird.

Die US 4,567,099 lehrt den Einsatz eines Blends zweier Styrol/Butadien-Dispersionen in Papierstrichanwendungen. Das Mischen zweier Dispersionen führt in der Regel zu einer Verdünnung der Gesamtdispersion, da sich Dispersionen mit kleinen Teilchengröße nur mit einem niedrigeren Feststoffgehalt herstellen lassen. Erst durch anschließendes energieintensives Aufkonzentrieren des Blends gelangt man zu höheren Feststoffgehalten. Überdies sind zwei Dispersionen vorab herzustellen, was für das Gesamtprodukt eine schlechte Raum/Zeit-Ausbeute bedeutet.

Die US 5,726,259 lehrt die unmittelbare Herstellung eines bimodalen Styrol/Butadien-Latexbinders für Papierstreichmassen. Der Latexbinder wird hergestellt, indem die Polymerisation mit einer in-situ-Saat gestartet wird, die Monomere portionsweise mittels 10 Monomergaben zugesetzt werden und nach 43 Gew.-% der Gesamtmonomermenge und 44 % der Gesamtdosierzeit der Monomere eine erhöhten Emulgatormenge zugesetzt wird. Dieses Verfahren zeichnet sich durch eine sehr langwierige Dosierung aus und hat somit eine schlechte Raum/Zeit Ausbeute. Nachteilig ist überdies, dass zur Erzielung der gewünschten Produkteigenschaften Schwefelregler eingesetzt werden.

Die US 4780503 beschreibt eine bimodale Polymerdispersion, bei deren Herstellung zu einem Zeitpunkt von mehr als 40 % Monomerumsatz Laurylethersulfat oder zusätzlicher Saatlatex zugesetzt wird. Gemäß dieser Lehre werden Dispersionen mit einem höheren Feststoffgehalt bei niedriger Viskosität erhalten. Allerdings sind die hiernach erhaltenen Viskositäten für heutige Laufgeschwindigkeiten von Beschichtungsmaschinen noch zu hoch. Eine Anwendung als Papierstrichbindemittel wird nicht gelehrt.

Der vorliegenden Erfindung lag daher als Aufgabe zugrunde, Polymerdispersionen mit einer ausgeprägten bimodalen Teilchengrößenverteilung, die durch Polymerisation von vinylaromatischer Verbindung und konjugiertem aliphatischen Dien erhalten werden, mit geringem technologischem Aufwand und bei verbesserter Raum-Zeit-Ausbeute herzustellen. Diese Polymerdispersionen sollen weniger Feinkoagulat enthalten und überdies geruchsarm sein. Eingearbeitet in Papierstreichmassen sollen sie auch bei hohen Scherkräften ein gutes rheologisches Verhalten aufweisen.

Die Aufgabe wird erfindungsgemäß gelöst durch ein Verfahren zur Herstellung einer wässrigen Polymerdispersion, die eine polymodale Teilchenverteilung der Polymerteilchen aufweist mit einer ersten Population großer Polymerteilchen und einer zweiten Population kleiner Polymerteilchen, durch radikalisch initiierte wässrige Emulsionspolymerisation, dadurch gekennzeichnet, dass man in einem wässrigen Medium

| | |
|---|---|
| (a) 40 bis 75 Gew.-Teile | mindestens einer vinylaromatischen Verbindung, |
| (b) 24,9 bis 59,9 Gew.-Teile | mindestens eines konjugierten aliphatischen Diens, |
| (c) 0,1 bis 10 Gew.-Teile | mindestens eines Säuregruppen enthaltenden Monomers und |
| (d) 0 bis 20 Gew.-Teile | mindestens eines sonstigen monoethylenisch ungesättigten Monomers, |

wobei sich die Mengen der Monomeren (a) bis (d) auf 100 Gew.-Teile aufsummieren,
nach einem Monomerzulaufverfahren polymerisiert, mit der Maßgabe, dass man
   - Monomere und Emulgator stetig dosiert,
   - anschließend an eine Periode P1, wenn 15 bis 30 % der Gesamtdosierzeit der Monomere verstrichen ist und 15 bis 30 Gew.-% der Gesamtmonomermenge zudosiert sind, die Dosierrate des Emulgators für eine Periode P2, die längstens 30 Minuten dauert, auf das 10 bis 100-fache der Durchschnittsdosierrate des Emulgators der Periode P1 erhöht.

Wenn nachfolgend eine Mengenangabe in Gew.-Teile gemacht wird, so bezieht sich diese, sofern nicht anders angegeben, auf 100 Gew.-Teile Gesamtmonomere.

Der Begriff "polymodal" ist dem Fachmann bekannt und bezeichnet eine Teilchengrößenverteilung mit zwei und mehr Maxima über die ganze Population der Dispersion.

Unter "kleine Polymerteilchen" bzw. "große Polymerteilchen" sind lediglich relative Angaben in Relation zur Teilchengröße zu verstehen. Dabei wird die Angabe "kleine Polymerteilchen" synonymn für "Population kleiner Polymerteilchen" und die Angabe "große Polymerteilchen" synonymn für "Population großer Polymerteilchen" gebraucht.

Sofern nicht anders angegeben, handelt es sich bei Angaben der Teilchengröße sowie der Teilchengrößenverteilung der Polymerteilchen, um Angaben die mittels analytischer Ultrazentrifuge (AUZ) gemacht wurde, die nachfolgend beschrieben wird.

Im Folgenden werden Verbindungen, die sich von Acrylsäure und Methacrylsäure ableiten können, teilweise verkürzt durch Einfügen der Silbe "(meth)" in die von der Acrylsäure abgeleitete Verbindung bezeichnet.

Unter Gesamtmonomermenge ist die Gesamtmenge aller in der Polymerisation eingesetzten Monomere inklusive der Monomere der gegebenenfalls vorhandenen Vorlage zu verstehen. Die Gesamtmonomermenge sind 100 Gew.-Teile Monomer.

Ist von der zudosierten Gesamtmonomermenge die Rede, so versteht man darunter die Gesamtmonomermenge abzüglich der Monomere der Vorlage.

Unter Gesamtdosierzeit der Monomere, ist der Zeitraum zu verstehen, den die stetige Dosierung von Monomeren dauert. Die Dosierung kann in Form der Zugabe einer Mischung sowie in Form getrennter Monomere erfolgen, deren Zugabe auch zeitversetzt starten kann. Entscheidend ist, dass zu jedem Zeitpunkt Monomer dosiert wird, die Zugabe also stetig ist. Dementsprechend beginnt die Gesamtdosierzeit mit dem Beginn der Zudosierung des ersten Monomers/gemisches und endet mit dem Ende der Dosierung des letzten Monomers/gemisches.

Unter Dosierrate ist eine Menge zu verstehen, die in einer Zeiteinheit zugegeben wird, also "Menge pro Zeit", üblicherweise in "g/min". Zum Beispiel ist die Durchschnittsdosierrate der Periode P1 des Emulgators die Menge aller Emulgatoren, die während der Periode P1 dosiert wird bezogen auf die zeitliche Dauer der Periode.

Zur Herstellung der wässrigen Polymerdispersionen können nachfolgende ethylenisch ungesättigte Monomere (a), (b), (c) und (d) eingesetzt werden.

Als vinylaromatische Verbindungen (Monomere der Gruppe (a)) kommen beispielsweise Styrol, α-Methylstyrol und/oder Vinyltoluol in Betracht. Aus dieser Gruppe von Monomeren wird vorzugsweise Styrol gewählt.

Die Monomere (a) vereinen einen Anteil von 40 bis 75 Gew.-Teile und vorzugsweise 45 bis 70 Gew.-Teile, insbesondere 50 bis 65 Gew.-Teile bezogen auf 100 Gew.-Teile Gesamtmonomere (a bis c und gegebenenfalls d) auf sich.

Als konjugiertes aliphatisches Dien (Monomere der Gruppe (b)) seien Butadien-1,3, Isopren, Pentadien-1,3, Dimethylbutadien-1,3 und Cyclopentadien beispielhaft genannt. Aus dieser Gruppe von Monomeren setzt man bevorzugt Butadien-1,3 und/oder Isopren ein.

Die Gesamtmenge der Monomere (b) beträgt 24,9 bis 59,9 Gew.-Teile, vorzugsweise 29,9 bis 54,9 Gew.-Teile und insbesondere 34,9 bis 49,9 Gew.-Teile bezogen auf 100 Gew.-Teile Gesamtmonomere.

Als Säuregruppen enthaltende Monomere (Monomere (c)) seien beispielhaft genannt ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende α,β-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt werden Acrylsäure, Methacrylsäure und Itaconsäure verwendet. Die genannten Säuren können sowohl als einzige Komponente als auch in ihrer Kombination eingesetzt werden.

Die Säuregruppen enthaltenden Monomeren können in Form der freien Säuren sowie in partiell oder vollständig mit geeigneten Basen neutralisierter Form bei der Polymerisation eingesetzt werden. Vorzugsweise verwendet man Natronlauge, Kalilauge oder Ammoniak als Neutralisationsmittel.

Die Gesamtmenge der Monomere (c) beträgt 0,1 bis 10 Gew.-Teile, vorzugsweise 0,1 bis 8 Gew.-Teile oder 1 bis 6 Gew.-Teile bezogen auf 100 Gew.-Teile Gesamtmonomere.

Sonstige monomethylenisch ungesättigte Monomere (d) sind von den Monomeren der Gruppen (a), (b) und (c) verschiedene Monomere. Bevorzugt werden sie ausgewählt unter Acrylamid und Methacrylamid, Vinylestern von gesättigten C₁- bis C₁₈-Carbonsäuren, vorzugsweise Vinylacetat, sowie Estern der Acrylsäure und der Methacrylsäure mit einwertigen C₁- bis C₁₈-Alkoholen wie Methylacrylat, Methylmethacrylat, Ethylacrylat, Ethylmethacrylat, n-Propylacrylat, n-Propylmethacrylat, Isopropylacrylat, Isopropylmethacrylat, n-Butylacrylat, n-Butylmethacrylat, Isobutylacrylat, Isobutylmethacrylat, sec.-Butylacrylat. sec.-Butylmethacrylat, tert.-Butylacrylat, tert.-Butylmethacrylat, Pentylacrylate, Pentylmethacrylate, 2-Ethylhexylacrylat, 2-Ethylhexylmethacrylat, Allylestern gesättigter Carbonsäuren, Vinylethern, Vinylketonen, Dialkylestern ethylenisch ungesättigter Carbonsäuren, N-Vinylpyrrolidon, N-Vinylpyrrolidin, N-Vinylformamid, N,N-Dialkylamonialkylacrylamiden, N,N-Dialkylaminoalkylmethacrylamiden, N,N-Dialkylaminoal-kylacrylaten, N,N-Dialkylaminoalkylmethacrylaten, Vinylchlorid und Vinylidenchlorid (Monomere der Gruppe (d)).

Diese Gruppe von Monomeren wird gegebenenfalls zur Modifizierung der Polymeren eingesetzt. Der Gesamtmenge aller sonstigen Monomere darf bis zu 20 Gew.-Teile bezogen auf 100 Teile Gesamtmonomer betragen. Bezogen auf 100 Gew.-Teile der Gesamtmonomere beträgt der Anteil an einem oder mehrerer Monomeren der Gruppe (d) 0 bis 20 Gew.-Teile, bevorzugt 0,1 bis 15 Gew.-Teile und insbesondere 0,5 bis 10 Gew.-Teile.

Sofern es sich um Acrylnitril und/oder Methacrylnitril handelt, wird es bevorzugt in einer Menge von 2 bis 12 Gew.-Teile und insbesondere von 4 bis 9 Gew.-Teilen bezogen auf auf 100 Gew.-Teile Gesamtmonomer eingesetzt.

Bevorzugt wird ein Verfahren, bei dem die vinylaromatische Verbindung Styrol und/oder Methylstyrol und das konjugierte aliphatische Dien 1,3-Butadien und/oder Isopren ist. Besonders vorteilhaft ist das Verfahren zur Herstellung von Styrol-Butadien-Dispersionen.

Mit Vorteil werden

| | |
|---|---|
| (a) 60 bis 75 Gew.-Teile | mindestens einer vinylaromatischen Verbindung und |
| (b) 24,9 bis 39,9 Gew.-Teile | mindestens eines konjugierten aliphatischen Diens |
| (c) 0,1 bis 8 Gew.-Teile | mindestens eines Säuregruppen enthaltenden Monomers und |
| (d) 0 bis 10 Gew.-Teile | mindestens eines sonstigen monoethylenisch ungesättigten Monomers, |

wobei sich die Mengen der Monomeren (a) bis (d) auf 100 Gew.-Teile aufsummieren, polymerisiert.

Insbesondere bevorzugt werden

| | |
|---|---|
| (a) 60 bis 70 Gew.-Teile | mindestens einer vinylaromatischen Verbindung und |
| (b) 29 bis 39 Gew.-Teile | mindestens eines konjugierten aliphatischen Diens |
| (c) 1 bis 6 Gew.-Teile | mindestens eines Säuregruppen enthaltenden Monomers und |
| (d) 0 bis 5 Gew.-Teile | mindestens eines sonstigen monoethylenisch ungesättigten Monomers, |

wobei sich die Mengen der Monomeren (a) bis (d) auf 100 Gew.-Teile aufsummieren, polymerisiert.

Die Emulsionspolymerisation erfolgt in einem wässrigen Medium. Hierbei kann es sich z. B. um vollständig entsalztes Wasser handeln oder auch um Mischungen aus Wasser und einem damit mischbaren Lösemittel wie Methanol, Ethanol, Ethylenglykol, Glycerin, Zuckeralkoholen wie Sorbitol oder Tetrahydrofuran. Die Gesamtmenge am wässrigen Medium wird dabei so bemessen, dass die erhaltene wässrige Polymerdispersion einen Feststoffgehalt von 20 bis 70 Gew.-%, häufig 30 bis 65 Gew.-% und oft 40 bis 60 Gew.-% aufweist.

Das erfindungsgemäße Verfahren ist ein Monomerzulaufverfahren. Unter Monomerzulaufverfahren versteht man, dass die Hauptmenge, üblicherweise wenigstens 80 %, vorzugsweise wenigstens 90 % der zu polymerisierende Monomere der Polymerisationsreaktion unter Polymerisationsbedingungen zugeführt werden.

Dabei ist möglich eine Teilmenge der Monomere vor Beginn der Polymerisation im Polymerisationsgefäß vorzulegen. So kann die Polymerisation gemäß dieser bevorzugten Variante in einer Vorlage, die bis zu 20 Gew.-Teile der Gesamtmonomere enthält, initiiert werden und anschließend Monomere und Emulator stetig dosiert werden. Insbesondere können bis zu 5 % des jeweiligen Monomers vorgelegt werden und dann die Polymerisation initiiert werden. Besonders bevorzugt werden nur die Monomere (a), (b) und gegebenenfalls (d) vorgelegt, bevorzugt bis zu 5 % des jeweiligen Monomers.

Unter Polymerisationsbedingungen sind dabei generell diejenigen Radikalinitiatormengen, Temperaturen und Drücke zu verstehen, unter denen die radikalisch initiierte wässrige Emulsionspolymerisation nicht zum Stillstand kommt. Die Polymerisation ist dabei prinzipiell abhängig von Art und Menge des verwendeten Radikalinitiators. Die Zusammenhänge zwischen Temperatur und Zerfallsgeschwindigkeit sind dem Fachmann für die gängigen Polymerisationsinitiatoren hinreichend bekannt oder können in Routineexperimenten ermittelt werden.

Erfindungsgemäß werden die Monomere und der Emulgator stetig dosiert. Mit anderen Worten, die Monomerdosierung sowie die Emulgatordosierung erfolgen in einem kontinuierlichen Mengenstrom, also ohne Unterbrechung.

Dabei wird das jeweilige Monomer bevorzugt mit einer Dosierrate dosiert, die nicht mehr als 30 %, vorzugsweise nicht mehr als 20 %, von dem Durchschnittswert des jeweiligen Gesamtzulaufs dieses Monomers abweicht. Gemäß einer bevorzugten Ausführungsform entspricht die Dosierrate der Monomere (Zunahme der Monomere) in etwa der Polymerisationsrate der Monomere (Abnahme der Monomere).

Ebenfalls bevorzugt wird ein Verfahren, bei dem keine Monomere vorgelegt werden. Gemäß einer Ausführungsform startet die stetige Dosierung der Monomere der Gruppen (a), (b), (c) und (d), letzteres sofern Bestandteil der Gesamtmonomere, zeitgleich.

Gemäß einer bevorzugten Ausführungsform startet die Dosierung des konjugierten aliphatischen Diens erst zu einem Zeitpunkt, zu dem mindestens 5 %, bevorzugt mindestens 8 %, insbesondere mindestens 10 % der vinylaromatischen Verbindung in einem stetigen Mengenstrom zudosiert sind. Bevorzugt startet man die Dosierung des Diens, wenn höchstens 30 % der vinylaromatischen Verbindung in einem stetigen Mengenstrom zudosiert sind.

Die vinylaromatische Verbindung wird unter Polymerisationsbedingungen bevorzugt in einem stetigen Mengenstrom über einen Zeitraum von mindestens 120 Minuten, bevorzugt über einen Zeitraum von 180 bis 300 Minuten, insbesondere über einen Zeitraum von 210 bis 270 Minuten zudosiert.

Das konjugierte aliphatische Dien wird in einem stetigen Mengenstrom bevorzugt über einen Zeitraum von mindestens 60 Minuten, besonders bevorzugt über einen Zeitraum von 120 bis 240 Minuten insbesondere über einen Zeitraum von 150 bis 210 Minuten zudosiert, wobei besonders bevorzugt zusätzlich die vinylaromatische Verbindung in einem stetigen Mengenstrom über einen Zeitraum von mindestens 120 Minuten, bevorzugt über einen Zeitraum von 180 bis 300 Minuten, insbesondere über einen Zeitraum von 210 bis 270 Minuten zudosiert wird.

Erfindungsgemäß werden Monomer und Emulgator stetig dosiert. Unter Emulgator sind im Rahmen des erfindungsgemäßen Verfahrens Emulgierhilfsmittel zu verstehen, die sowohl die Monomertröpfchen als auch Polymerisatteilchen in der wässrigen Phase dispers verteilt halten und so die Stabilität der erzeugten wässrigen Polymerisatdispersion gewährleisten. Als solche kommen die zur Durchführung von radikalischen wässrigen Emulsionspolymerisationen üblicherweise eingesetzten Emulgatoren in Betracht.

Als Emulgatoren kommen grenzflächenaktive Stoffe in Betracht, deren zahlenmittleres Molekulargewicht üblicherweise unterhalb von 2000 g/mol oder vorzugsweise unterhalb von 1500 g/mol liegt.

Als Emulgatoren sind sowohl anionische, kationische als auch nichtionische Emulgatoren geeignet. Vorzugsweise werden als grenzflächenaktive Substanzen Emulgatoren eingesetzt, deren relative Molekulargewichte üblicherweise unterhalb derer von Schutzkolloiden liegen.

Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₁₀), Ethoxylate langkettiger Alkohole (EO-Grad: 3 bis 100, Alkylrest: C₈-C₃₆) sowie Polyethylenoxid/Polypropylenoxid-Homo- und Copolymere. Diese können die Alkylenoxideinheiten statistisch verteilt oder in Form von Blöcken einpolymerisiert enthalten. Gut geeignet sind z. B. EO/PO-Blockcopolymere. Bevorzugt werden Ethoxylate langkettiger Alkanole (Alkylrest C₁-C₃₀, mittlerer Ethoxylierungsgrad 5 bis 100) und darunter besonders bevorzugt solche mit einem linearen C₁₂-C₂₀-Alkylrest und einem mittleren Ethoxylierungsgrad von 10 bis 50 sowie ethoxylierte Monoalkylphenole, eingesetzt.

Geeignete anionische Emulgatoren sind beispielsweise Alkali- und Ammoniumsalze von Alkylsulfaten (Alkylrest: C₈-C₂₂), von Schwefelsäurehalbestern ethoxylierter Alkanole (EO-Grad: 2 bis 50, Alkylrest: C₁₂-C₁₈) und ethoxylierter Alkylphenole (EO-Grad: 3 bis 50, Alkylrest: C₄-C₉), von Alkylsulfonsäuren (Alkylrest: C₁₂-C₁₈), von Alkylarylsulfonsäuren (Alkylrest: C₉-C₁₈) und von Diestern der Sulfobernsteinsäure mit C₄-C₁₈-Alkanolen. Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren sind ebenfalls Bis(phenylsulfonsäure)ether bzw. deren Alkali- oder Ammoniumsalze, die an einem oder beiden aromatischen Ringen eine C₄-C₂₄-Alkylgruppe tragen, geeignet. Diese Verbindungen sind allgemein bekannt, z. B. aus der US-A-4,269,749, und im Handel erhältlich, beispielsweise als Dowfax^{®} 2A1 (Dow Chemical Company).

Bevorzugt wird mindestens ein anionischer und/oder mindestens ein nichtionischer Emulgator eingesetzt.

Bevorzugt wird der Emulgator der stetigen Dosierung ausgewählt unter Alkali- und Ammoniumsalzen von C₈-C₂₂-Alkylsulfaten und von Schwefelsäurehalbestern ethoxylierter Alkanole (EO-Grad: 2 bis 40, Alkylrest: C₁₂-C₁₈) und von Schwefelsäurehalbestern ethoxylierter Alkylphenole (EO-Grad: 10 bis 40, Alkylrest: C₄-C₉), und Bis(phenylsulfonsäure)ether bzw. deren Alkali- oder Ammoniumsalze, die an einem oder beiden aromatischen Ringen eine C₄-C₂₄-Alkylgruppe tragen.

Besonders bevorzugt wird eine Mischung aus Emulgatoren eingesetzt, jeweils in Form ihrer Alkali- und Ammoniumsalze, insbesondere eine Mischung von Alkylsulfaten (Alkylrest: C₈-C₂₂) mit Schwefelsäurehalbestern ethoxylierter Alkanole (EO-Grad: 2 bis 40, Alkylrest: C₁₂-C₁₈) oder mit Schwefelsäurehalbestern ethoxylierter Alkylphenole (EO-Grad: 10 bis 40, Alkylrest: C₄-C₉) oder mit Sulfobernsteinsäure-2-ethylhexylester, oder eine Mischung von Alkali- und Ammoniumsalze von Alkylsulfaten mit Bis(phenylsulfonsäure)ether bzw. deren Alkali- oder Ammoniumsalze, die an einem oder beiden aromatischen Ringen eine C₄-C₂₄-Alkylgruppe tragen (z.B. Dowfax 2A1 der Fa Dow Chemical Company).

Besonders bevorzugt wird ein Emulgatormischung aus Natriumlaurylsulfat und ethoxiliertem Natriumlaurylethersulfat sowie eine Mischung aus Natriumlaurylsulfat und Dowfax^{®} 2A1.

Die stetige Dosierung von Emulgator und Monomer kann dabei in getrennten Mengenströmen erfolgen. Es ist jedoch vorteilhaft Emulgator und mindestens ein Monomer zusammen als Mischung zu dosieren. Es werden bevorzugt 0,1 bis 5 Gew.-Teile, bevorzugt 0,2 bis 2,0 Gew.-Teile Emulgator bezogen auf 100 Gew.-Teile Monomere in Mischung mit mindestens einem Monomer stetig dosiert.

Dabei werden Emulgatoren bevorzugt mit einer Dosierrate dosiert, die nicht mehr als 30 %, vorzugsweise nicht mehr als 20 %, von dem Durchschnittswert des jeweiligen Gesamtzulaufs abweicht.

Erfindungsgemäß wird anschließend an eine Periode P1, wenn 15 bis 30 % der Gesamtdosierzeit der Monomere verstrichen ist und 15 bis 30 % der Gesamtmonomermenge zudosiert sind, die Dosierrate des Emulgators für eine Periode P2, die längstens 30 Minuten dauert, auf das 10 bis 100-fache der Durchschnittsdosierrate des Emulgators der Periode P1 erhöht. Die Periode P1 startet mit Beginn der stetigen Dosierung der Monomere, also im Fall des Vorhandenseins einer Vorlage nach der Initiierung der Polymerisation in der Vorlage, und endet, wenn 15 bis 30 %, bevorzugt 20 bis 25 % der Gesamtdosierzeit der Monomere verstrichen ist und 15 bis 30 Gew.-%, bevorzugt 20 bis 25 der Gesamtmonomermenge zudosiert sind, wobei die Dosierung so gewählt wird, dass beide Bedingungen erfüllt werden.

Die sich an die Periode P1 anschließende "Periode der erhöhten Dosierung" wird nachfolgend auch als "P2" bezeichnet. Bevorzugt beträgt die Dauer der Periode P2 bis zu 25 Minuten, insbesondere 5 bis 20 Minuten. Aufgrund der erhöhten Dosierrate während der Periode P2 wird diese zusätzliche Emulgatordosierung auch als "Emulgatorschuss" bezeichnet.

Im Anschluss an die Periode P2 folgt eine Periode P3 in der die Dosierrate des Emulgators bis zu 20 % von der Dosierrate des Emulgators der Periode P1 nach oben oder unten abweichen kann.

Bevorzugt beträgt während der Periode P2 die Dosierrate des Emulgators das 20 bis 90-fache der Durchschnittsdosierrate des Emulgators der Periode P1.

Der während der Periode P1 und der Periode P3 eingesetzte Emulgator bzw. die eingesetzte Emulgatormischung ist in der Regel derselbe. Der Emulgator der Periode P2 kann derselbe Emulgator wie in der Periode P1 sein. Bevorzugt wird in der Periode P2 eine Mischung der Emulgatoren der Periode P1 eingesetzt jedoch mit einem geänderten Mengenverhältnis, beispielsweise indem nur einer von zwei Emulgatoren als "Emulgatorschuss" zusätzlich dosiert wird.

Gemäß einer bevorzugten Ausführungsform wird ein Monomer/Emulgatorgemisch über den gesamten Zulauf, also die Periode P1, P2 und P3 stetig dosiert und zusätzlich in der Periode P2 die Dosierrate eines der Emulgatoren des Gemisches erhöht.

Bevorzugt wird als Emulgator der Periode P2 ein anionischer Emulgator gewählt, insbesondere ausgewählt unter Laurylsulfat, Schwefelsäurehalbestern ethoxylierter Alkanole und Arylsulfonat.

Nachfolgend wird die Dosierung beispielhaft für eine Polymerisation mit Initiierung in einer Vorlage und anschließender Monomerdosierung mit gleichbleibendem Mengenstrom erläutert. In Beispiel 1 wird in der Vorlage die Polymerisation mit 2,9 Gew.-Teilen der Gesamtmonomermenge initiiert und dann die stetige Dosierung einer Mischung aus Monomer und Emulgator gestartet. Die Gesamtmenge aller Monomere inklusive der Monomere der Vorlage sind 100 Gew.-Teile (im Rahmen dieser Anmeldung auch als Gesamtmonomermenge bezeichnet). Es werden somit 97,1 Gew.-Teile stetig zudosiert. Die Gesamtdauer der Monomerdosierung beträgt 240 Minuten. Nach 50 Minuten gerechnet ab Beginn der stetigen Dosierung wird eine zusätzliche Dosierung des Emulgators gestartet, die 20 Minuten andauert. Die Erhöhung der Emulgatormenge, der sogenannte Emulgatorschuss, erfolgt somit nach 21 % der Gesamtdosierzeit der Monomere. Nach den 50 Minuten sind aufgrund der konstanten Monomerdosierung 20,2 Gew.-Teile Monomere zudosiert. Über die Gesamtdosierzeit von 240 Minuten werden 0,74 Gew.-Teile Emulgator bezogen auf 100 Gew.-Teile Gesamtmonomer in Mischung mit den Monomeren stetig dosiert. Entsprechend sind nach 50 Minuten 0,15 Gew.-Teile Emulgator zudosiert. Dies entspricht einer Durchschnittsdosierrate der Periode P1 von 0,00308 Gew.-Teilen/min. Die Dosierung des Emulgators während des Emulgatorschusses beträgt 1 Gew.-Teil über einen Zeitraum von 20 Minuten, also eine Dosierrate von 0,05 Gew.-Teile/min. Damit werden während des Emulgatorschusses 0,053 Gew.-Teile/pro Minute dosiert und damit beträgt die Dosierrate das 17fache (gerundet, exakt: 16,6-fache) der Durchschnittsdosierrate des Emulgators.

Es wird angenommen, dass die im Polymerisationsgemisch vorliegende Emulgatorkonzentration während der Periode P1 unterhalb der kritischen Micellenkonzentration ist, und während der Periode P2 oberhalb der kritischen Micellenkonzentration ist. Nach dieser Theorie würden sich in der Periode P2 neue Micellen bilden und ein zweites Teilchenwachstum würde gestartet.

Bei dem erfindungsgemäßen Verfahren verwendet man Radikalinitiatoren (auch als radikalische Polymerisationsinitiatoren bezeichnet) also Initiatoren, die unter den Reaktionsbedingungen Radikale bilden. Es kann sich dabei sowohl um Peroxide, als auch um Azoverbindungen handeln. Selbstverständlich kommen auch Redoxinitiatorsysteme in Betracht.

Als Peroxide können prinzipiell anorganische Peroxide und/oder organische Peroxide eingesetzt werden. Als anorganische Peroxide eigen sich beispielsweise Wasserstoffperoxid sowie Peroxodisulfate, wie die Mono- oder Di-Alkalimetall- oder Ammoniumsalze der Peroxodischwefelsäure, beispielsweise deren Mono- und Di-Natrium-, -Kalium- oder Ammoniumsalze. Als organische Peroxide eignen sich beispielsweise Alkylhydroperoxide wie tert.-Butylhydroperoxid, Arylhydroperoxide wie p-Menthyl- oder Cumolhydroperoxid, sowie Dialkyl- oder Diarylperoxide, wie Di-tert.-Butyl-, Dibenzoyl- oder Di-Cumolperoxid.

Als Azoverbindung finden im Wesentlichen 2,2'-Azobis(isobutyronitril), 2,2'-Azo-bis-(2-methyl-butyronitril), 2,2'-Azobis(2,4-dimethylvaleronitril), 2,2'-Azobis(N,N'-dimethylenisobutyroami-din)dihydrochlorid -und 2,2'-Azobis(amidinopropyl)dihydrochlorid (AIBA, entspricht V-50 von Wako Chemicals) Verwendung.

Redoxinitiatorsysteme sind kombinierte Systeme, die aus wenigstens einem organischen oder anorganischen Reduktionsmittel und wenigstens einem Peroxid zusammengesetzt sind. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Acetonbisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Bevorzugte Radikalinitiatoren sind anorganische und organische Peroxide bevorzugt Ammonium- oder Alkalimetallsalze von Peroxosulfaten oder Peroxodisulfaten, sowie tert.-Butyl-, p-Menthyl- und Cumylhydroperoxid, insbesondere ausgewählt unter Natrium- und Kaliumperoxodisulfat, tert.-Butylhydroperoxid und Cumylhydroperoxid. Besonders bevorzugt werden dabei sowohl mindestens ein anorganisches Peroxid bevorzugt Peroxodisulfat, insbesondere Natriumperoxodisulfat, und ein organisches Peroxid bevorzugt Alkylhydroperoxid, insbesondere t-Butylhydroperoxid verwendet.

Bevorzugt wird ein erfindungsgemäßes Verfahren, bei dem während des Monomerzulaufs kein Reduktionsmittel anwesend ist, welches mit den organischen oder anorganischen Peroxiden ein Red/Ox-Initiatorsystem bilden kann.

Bevorzugt werden organische Peroxide, die sowohl öl- als auch wasserlöslich sind. Im Rahmen dieser Schrift sollen als wasserlösliche organische Peroxide solche verstanden werden, die bei 20 °C und Atmosphärendruck in entionisiertem Wasser eine Löslichkeit ≥ 1 Gew.-% aufweisen. Im Rahmen dieser Schrift sollen als öllösliche organische Peroxide solche verstanden werden, die bei 20 °C und Atmosphärendruck in Styrol eine Löslichkeit ≥ 1 Gew.-% aufweisen. Beispielhaft seien Alkylhydroperoxide wie tert.-Butyl-, p-Menthyl- oder Cumolhydroperoxid genannt.

Bevorzugt wird das anorganische Peroxid ausgewählt unter Wasserstoffperoxid und Ammonium- oder Alkalimetallsalzen von Peroxodisulfaten und das organische Peroxid ausgewählt unter Alkylhydroperoxiden und Arylhydroperoxiden.

Besonders bevorzugt werden die folgenden Kombinationen aus Peroxodisulfaten mit Alkylhydroperoxiden beispielsweise Natriumperoxodisulfat mit t-Butylhydroperoxid oder Ammoniumperoxodisulfat mit t-Butylhydroperoxid verwendet.

Die Polymerisation erfolgt in der Regel unter Einsatz von 0,1 bis 5 Gew.-Teilen des Radikalinitiators, vorzugsweise 0,5 bis 4 Gew.-Teilen des Radikalinitiators, vorzugsweise mindestens eines anorganischen und/oder organischen Peroxids, jeweils bezogen auf 100 Gew.-Teile Gesamtmonomere. Bevorzugt beträgt das Verhältnis der Gesamtmenge an anorganischem Peroxid zur Gesamtmenge an organischem Peroxid 1/10 zu 10 /1, bevorzugt 1/5 zu 5/1, insbesondere 1/3 zu 3/1 über das gesamte Verfahren betrachtet.

Gemäß einer bevorzugten Variante wird die Dosierung des organischen Peroxids zu einem Zeitpunkt gestartet, zu dem bereits mindestens 5 %, bevorzugt mindestens 8 % insbesondere mindestens 10 % und höchsten 20 % der vinylaromatischen Verbindung in einem stetigen Mengenstrom zudosiert sind. Der Zugabezeitpunkt ist also unabhängig davon, ob die Polymerisation mit oder ohne Vorlage initiiert wurde.

Unter Initiierung der Polymerisationsreaktion wird der Start der Polymerisationsreaktion der im Polymerisationsgefäß vorliegenden Monomeren durch Zerfall des Radikalinitiators verstanden. Die Polymerisation startet beispielsweise, wenn das Polymerisationsgemisch Monomere und anorganisches Peroxid enthält und eine Temperatur im Bereich von ≥ 80°C bis ≤95°C erreicht.

**Um die Polymerisation** zu starten, bereitet man zunächst eine wässrige Lösung, die eine Teilmenge Schutzkolloid und/oder einen Emulgator in gelöster Form, gegebenenfalls eine Teilmenge anorganisches Peroxid, gegebenenfalls eine Teilmenge Monomer, sowie gegebenenfalls Polystyrolsaat enthält. Diese Mischung wird vorzugsweise auf die Temperatur erhitzt, bei der die Polymerisation der Monomeren erfolgen soll. Sobald die jeweils gewünschte Polymerisationstemperatur erreicht ist oder innerhalb einer Zeitspanne von 1 bis 15 Minuten, vorzugsweise 1 bis 10 Minuten nach dem Erreichen der Polymerisationstemperatur beginnt man mit dem Dosieren der Monomere sowie des anorganischen Peroxids.

Gemäß einer bevorzugten Ausführungsform wird die Polymerisation in einem wässrigen Polymerisationsgemisch initiiert, das bis zu 5 % der vinylaromatischen Verbindung und kein aliphatisches Dien enthält. Hiernach startet die Polymerisation, wenn
- 0,1 bis 5 % der vinylaromatischen Verbindung vorgelegt sind,
- die Reaktionstemperatur auf eine Temperatur im Bereich von ≥ 80°C bis ≤ 95°C eingestellt ist und
- anorganisches Peroxid, bevorzugt 0,1 bis 0,5 Gew.-Teile des anorganischen Peroxids bezogen auf 100 Gew.-Teile Gesamtmonomer, vorgelegt ist.

Dabei ist die Reihenfolge, in der die Bedingungen eingestellt werden, nicht ausschlaggebend. Besonders bevorzugt wählt man 0,1 bis 0,5 Gew.-Teile anorganisches Peroxid, bevorzugt ein Ammoniumsalz oder ein Alkalimetallsalz von einem Peroxodisulfat, zum Initiieren der Polymerisation und dosiert anschließend die vinylaromatische Verbindung und 0,1 bis 2 Gew.-Teile anorganisches Peroxid zu, wobei die Dosierung der 0,1 bis 2 Gew.-Teile organischen Peroxids erst ab dem Zeitpunkt erfolgt, zu dem bereits mindestens 5 % der vinylaromatischen Verbindung zudosiert sind, wobei die Dosierung des anorganischen Peroxids, des organischen Peroxids wie auch der vinylaromatischen Verbindung jeweils in einem stetigen Mengenstrom erfolgt und sich die Gew.-Teile der Peroxide jeweils auf 100 Gew.-Teile Gesamtmonomere beziehen.

Wie bei allen radikalischen Polymerisationsreaktionen ist es vorteilhaft, wenn die Vorlage der Reaktionskomponenten, die Dosierung/Polymerisation sowie die Nachreaktion im Reaktionsgefäß unter Inertgasatmosphäre, beispielsweise unter Stickstoff- oder Argonatmosphäre, erfolgt.

**Bevorzugte** Polymerisationsbedingungen sind eine Temperatur im Bereich von ≥ 75°C bis ≤ 115°C, bevorzugt ≥ 80°C bis ≤ 105°C, insbesondere ≥ 85°C bis ≤ 100°C. Die Dosierung des konjugierten aliphatischen Diens erfolgt in der Regel bei erhöhtem Druck. Die Dosierung des konjugierten aliphatischen Diens, findet bevorzugt bei einem Druck im Bereich von 5 bis 15 bar statt. Der erhöhte Druck bewirkt, dass sich beispielsweise das bei Normaldruck und Raumtemperatur gasförmige 1,3-Butadien weitgehend im Polymerisationsgemisch befindet.

Die Polymerisation kann in Gegenwart einer abgebauten Stärke durchgeführt werden. Gemäß einer bevorzugten Ausführungsform ist während der Polymerisation keine abgebaute Stärke zugegen. Gemäß einer ebenfalls bevorzugten Ausführungsform findet die Polymerisation in Gegenwart einer abgebauten Stärke, bevorzugt 15 bis 100 Gew.-Teile einer abgebauten Stärke bezogen auf 100 Gew.-Teile der Monomeren, ein.

Als Ausgangsstärken zur Herstellung der erfindungsgemäß zu verwendenden abgebauten Stärken eignen sich alle nativen Stärken wie Stärken aus Mais, Weizen, Hafer, Gerste, Reis, Hirse, Kartoffeln, Erbsen, Tapioka, Sorghum oder Sago. Von Interesse als Ausgangsstärken sind außerdem solche natürlichen Stärken, die einen hohen Amylopektingehalt aufweisen wie Wachsmaisstärke und Wachskartoffelstärke. Der Amylopektingehalt dieser Stärken liegt oberhalb von 90 %, meistens bei 95 bis 100 %.

Weiterhin können mittels Veretherung oder Veresterung modifizierte Stärken zur Herstellung der erfindungsgemäßen Polymerdispersionen eingesetzt werden. Durch die Modifizierung findet in der Regel auch ein Abbau statt. Solche Produkte sind bekannt und im Handel erhältlich. Sie werden beispielsweise durch Veresterung von nativer Stärke oder abgebauter nativer Stärke mit anorganischen oder organischen Säuren, deren Anhydriden oder Chloriden hergestellt. Von besonderem Interesse sind phosphatierte und acetylierte abgebaute Stärken. Die gängigste Methode zur Veretherung von Stärken besteht in der Behandlung von Stärke mit organischen Halogenverbindungen, Epoxiden oder Sulfaten in wässriger alkalischer Lösung. Bekannte Stärkeether sind Alkylether, Hydroxyalkylether, Carboxyalkylether und Allylether. Außerdem eignen sich die Umsetzungsprodukte von Stärken mit 2,3-Epoxipropyltrimethylammoniumchlorid.

Weitere geeignete Stärken sind kationisch modifizierte Stärken, d.h. Stärkeverbindungen, welche Aminogruppen oder Ammoniumgruppen aufweisen.

Der Abbau der Stärken kann enzymatisch, oxidativ oder hydrolytisch durch Einwirkung von Säuren oder Basen erfolgen. Der Abbau von Stärke ist allgemein bekannt und wird beispielsweise in der EP 2580257 beschrieben. Abgebaute Stärken sind im Handel erhältlich. Man kann für die Polymerisation eine abgebaute Stärke einsetzen oder diese in situ herstellen und anschließend in ihrer Gegenwart die Polymerisation durchführen.

Besonders bevorzugt sind abgebaute native Stärken, insbesondere zu Maltodextrin abgebaute native Stärken.

Bevorzugt werden abgebauten Stärken mit einer intrinsischen Viskosität ηi von ≤0,07 dl/g oder ≤0,05 dl/g. Die intrinsische Viskosität ηi der abgebauten Stärken liegt vorzugsweise in dem Bereich von 0,02 bis 0,06 dl/g. Die intrinsische Viskosität ηi wird bestimmt gemäß DIN EN1628 bei einer Temperatur von 23 °C.

Gemäß einer Verfahrensvariante wird die Polymerisation in Gegenwart wässrigen Dispersion von feinteiligem Polystyrol durchgeführt. Vorzugsweise setzt man 0,1 bis 5 Gew.-Teile insbesondere 0,2 bis 3 Gew.-Teile bezogen auf Gesamtmonomere ein. Bevorzugt wird die Polymerisation in einer Vorlage, die bis zu 2 Gew.-Teile wässrigen Dispersion von feinteiligem Polystyrol bezogen auf 100 Gew.-Teile Gesamtmonomere enthält, initiiert und anschließend Monomere und Emulator stetig dosiert. Vorzugsweise ist feinteiliges Polystyrol, Polystyrol mit einem mittleren Teilchendurchmesser von 20 bis 40 nm (bestimmt mittels Ultrazentrifuge). Es wird angenommen, dass eine solche feinteilige Polystyroldispersion als Saatpolymer - auch als Saatlatex bezeichnet - wirkt und damit die Polymerisation in den Teilchen des Saatpolymers startet und ein gleichförmiges Teilchenwachstum stattfindet.

Um die Eigenschaften der Polymeren zu modifizieren, kann man die Emulsionspolymerisation gegebenenfalls in Gegenwart mindestens eines Kettenübertragungsmittels, das nicht schwefel- oder halogenhaltig ist, durchführen. Sie werden üblicherweise eingesetzt, um das Molekulargewicht der durch eine radikalisch wässrige Emulsionspolymerisation zugänglichen Polymerisate zu reduzieren bzw. zu kontrollieren.

Bevorzugt soll das erfindungsgemäße Verfahren nicht den Einsatz von Kettenübertragungsmittel ausgewählt unter aliphatischen und/oder araliphatischen Halogenverbindungen, organische Thioverbindungen und substituierte Thiole während der Polymerisation umfassen.

Beispiele für Kettenübertragungsmittel, die nicht schwefel- oder halogenhaltig sind, sind Aldehyde wie Formaldehyd, Acetaldehyd und Propionaldehyd, organische Säuren wie Ameisensäure, Natriumformiat oder Ammoniumformiat, Alkohole wie insbesondere Isopropanol sowie Phosphorverbindungen wie Natriumhypophosphit. Falls man bei der Polymerisation kettenübertragenden Verbindungen, die nicht schwefel- oder halogenhaltig sind, einsetzt, so beträgt die jeweils verwendete Menge beispielsweise 0,01 bis 5, vorzugsweise 0,1 bis 1 Gew.-Teile, bezogen auf 100 Gew.-Teile der bei der Polymerisation eingesetzten Monomere. Die Kettenübertragungsmittel werden vorzugsweise zusammen mit den Monomeren in die Vorlage dosiert. Sie können jedoch auch teilweise oder vollständig in der Vorlage anwesend sein. Sie können auch stufenweise gegenüber den Monomeren versetzt zudosiert werden.

Besonders bevorzugt wird ein Verfahren, bei dem während der Polymerisation kein Kettenübertragungsmittel zugegen ist.

Um die Polymerisationsreaktion zu vervollständigen, reicht es in den meisten Fällen, das Reaktionsgemisch nach Beendigung der Monomerzugabe noch beispielsweise 1 bis 3 Stunden bei der Polymerisationstemperatur zu rühren. Üblicherweise hat man anschließend einen Umsatz von um die 95% erreicht.

Um den Umsatz noch weiter zu erhöhen und damit den Restmonomergehalt zu senken, kann man beispielsweise weiteren Radikalinitiator aus der Gruppe der oben genannten Initiatoren zum Reaktionsgemisch zugeben bzw. deren Zugabe verlängern und eine sogenannte "Nachpolymerisation", also eine Polymerisation durchzuführen, um Umsätze >95% bis zu 99% zu erzielen.

Eine solche Nachpolymerisation kann bei gleicher, niedrigerer oder auch höherer Temperatur wie die Hauptpolymerisation durchgeführt werden. Beispielsweise dosiert man in dieser Phase 0,1 bis 1,5 Gew.-Teile, bezogen auf 100 Gew.-Teile der bei der Polymerisation eingesetzten Monomere, an anorganischem Peroxid, bevorzugt Natriumperoxodisulfat, als Initiator zu und stellt die Polymerisationstemperatur auf eine Temperatur im Bereich von 80 bis 120 °C ein.

Der pH-Wert kann während der Polymerisation beispielsweise 1 bis 5 betragen. Nach Ende der Polymerisation bei einem Umsatz >95% wird der pH-Wert beispielsweise auf einen Wert zwischen 6 und 7 eingestellt.

Weiterhin kann auch eine chemische Desodorierung durchgeführt werden. Sofern noch Spuren von Restmonomeren entfernt werden sollen, kann dies auch chemisch durch unter Einwirkung von obengenannten Redoxinitiatorsystemen und Systemen wie sie in der DE-A 44 35 423, DE-A 44 19 518 sowie in der DE-A 44 35 422 aufgeführt sind, erfolgen.

Die Behandlung mit dem Redoxinitiatorsystem wird im Temperaturbereich von 60 bis 100°C, vorzugsweise bei 70 bis 90°C durchgeführt. Die Redoxpartner können der Dispersion unabhängig voneinander vollständig, portionsweise oder stetig über einen Zeitraum von 10 Minuten bis 4 Stunden zugegeben werden. Zur Verbesserung der Nachpolymerisationswirkung der Redoxinitiatorsysteme können der Dispersion auch lösliche Salze von Metallen wechselnder Wertigkeit, wie Eisen-, Kupfer oder Vanadium-salze, zugesetzt werden. Häufig werden auch Komplexbildner zugegeben, die die Metallsalze unter den Reaktionsbedingungen in Lösung halten.

Im Anschluss an die Polymerisationsreaktion (Hauptpolymerisation + Nachpolymerisation) und gegebenenfalls chemischer Desodorierung kann es erforderlich sein, die wässrigen Polymerdispersionen weitgehend frei von Geruchsträgern, wie Restmonomeren und anderen organischen flüchtigen Bestandteilen zu gestalten, was auch als physikalische Desodorierung bezeichnet wird. Dies kann in an sich bekannter Weise physikalisch durch destillative Entfernung (insbesondere über Wasserdampfdestillation) oder durch Abstreifen mit einem inerten Gas erreicht werden.

Die vorliegende Erfindung betrifft auch die nach dem erfindungsgemäßen Verfahren erhältlichen Dispersionen. Diese zeichnen sich dadurch aus, nahezu koagulatfreie wässrige Dispersionen zu sein. Die Menge an Koagulat liegt im ppm-Bereich und beträgt vorzugsweise weniger als 100 ppm, insbesondere weniger als 50 ppm.

Weiterhin weisen sie in der Regel einen Feststoffgehalt von ca. 50 Gew.-%, bevorzugt im Bereich von 45 bis 55 Gew.-% auf. Die erfindungsgemäßen Dispersionen weisen einen geringen Anteil an 4-Phenylcycohexen auf.

Die erfindungsgemäß erhaltenen Polymerdispersionen weisen eine polymodale Teilchenverteilung auf.

Nach dem erfindungsgemäßen Verfahren sind wässrige Polymerdispersionen erhältlich, deren Anteil der ersten Population großer Polymerteilchen 60 bis 95 Gew.-% und der Anteil der zweiten Population kleiner Polymerteilchen 5 bis 40 Gew.-% beträgt, bezogen auf das Gesamtpolymer der Dispersion.

Eine Betrachtung der Teilchengröße zeigt mindestens zwei Maxima. Die Analyse der Teilchengröße wird mittels analytischer Ultrazentrifuge durchgeführt (AUZ).

Bevorzugt wird eine Polymerdispersion, deren Teilchengrößenverteilung ein Peakmaximum im Bereich von 80 bis 160 nm, besonders bevorzugt im Bereich von 90 bis 140 nm aufweist und ein zweites Peakmaximum in Bereich von 40 bis 80 nm, besonders bevorzugt im Bereich von 45 bis 70 nm aufweist.

Der Abstand zwischen den beiden Peakmaxima sollte bevorzugt nicht mehr als 80 nm betragen, besonders bevorzugt nicht mehr als 60 nm.

Üblicherweise überlappen die Peaks der großen Teilchen und der kleinen Teilchen nicht oder nur gering, eine Überlappung bis zu 20 % ist für den angestrebten Effekt der guten Rheologie nicht abträglich.

Die erfindungsgemäßen wässrigen Polymerdispersionen werden als Bindemittel, Klebstoff, Schlichtemittel für Fasern, zur Herstellung von Überzügen oder zur Herstellung von Papierstreichmassen verwendet. Die erfindungsgemäßen wässrigen Polymerdispersionen eignen sich sowohl zum Schlichten von Textilfasern und auch zum Schlichten von Mineralfasern, insbesondere Glasfasern. Aufgrund ihrer guten Klebkraft, insbesondere bei Verwendung von Comonomeren, welche zu einer niedrigen Glasübergangstemperatur des Copolymers (z. B. kleiner 20°C) führen, kann man sie außerdem als Klebstoff zum Beispiel zur Herstellung von Laminaten und zur Herstellung von Überzügen wie zum Beispiel Barrierebeschichtungen verwenden. Bevorzugt werden die erfindungsgemäßen wässrigen Polymerdispersionen als Bindemittel in Papierstreichmassen eingesetzt.

Ein Gegenstand der Erfindung ist daher auch eine Papierstreichmasse, enthaltend
(i) anorganisches Pigment und
(ii) eine oben beschriebene, nach dem erfindungsgemäßen Verfahren erhältliche wässrige Polymerdispersion
(iii) und gegebenenfalls weitere Hilfsstoffe.

Papierstreichmassen enthalten neben Wasser im Allgemeinen Pigmente, Bindemittel und Hilfsstoffe zur Einstellung der erforderlichen rheologischen Eigenschaften, z. B. Verdicker. Die Pigmente sind üblicherweise in Wasser dispergiert. Die Papierstreichmasse enthält Pigmente in einer Menge von vorzugsweise mindestens 80 Gew.-%, z. B. 80 bis 95 Gew.-% oder 80 bis 90 Gew.-%, bezogen auf den Gesamtfeststoffgehalt.

In Betracht kommen insbesondere Weißpigmente. Geeignete Pigmente sind beispielsweise Metallsalzpigmente wie z.B. Calciumsulfat, Calciumaluminatsulfat, Bariumsulfat, Magnesiumcarbonat und Calciumcarbonat, wovon Carbonatpigmente, insbesondere Calciumcarbonat bevorzugt sind. Das Calciumcarbonat kann gemahlenes Calciumcarbonat (GCC, natural ground calcium carbonate), ausgefälltes Calciumcarbonat (PCC, precipitated calcium carbonate), Kalk oder Kreide sein. Geeignete Calciumcarbonatpigmente sind z.B. verfügbar als Covercarb^{®} 60, Hydrocarb^{®} 60 oder Hydrocarb^{®} 90 ME. Weitere geeignete Pigmente sind z.B. Kieselsäuren, Aluminiumoxide, Aluminiumhydrat, Silikate, Titandioxid, Zinkoxid, Kaolin, Tonerde, Talkum oder Siliziumdioxid. Geeignete weitere Pigmente sind z.B. verfügbar als Capim^{®} MP 50 (Clay), Hydragloss^{®} 90 (Clay) oder Talcum C10.

Die Papierstreichmasse enthält die erfindungsgemäß hergestellte Polymerdispersion als alleiniges Bindemittel oder in Kombination mit weiterem Bindemittel. Die wichtigsten Aufgaben von Bindemitteln in Papierstreichmassen sind, die Pigmente an das Papier und die Pigmente untereinander zu verbinden und teilweise Hohlräume zwischen Pigmentpartikeln aufzufüllen.

Auf 100 Gew.-Teile Pigmente verwendet man beispielsweise 1 bis 50 Gew.-Teile, vorzugsweise 1 bis 25 Gew.-Teile oder 5 bis 20 Gew.-Teile des erfindungsgemäßen Polymers (fest, d.h. ohne Wasser oder sonstige bei 21 °C, 1 bar flüssige Lösemittel).

Bevorzugt wird eine Papierstreichmasse, die die Polymerisate der wässrigen Polymerdispersion in einer Menge von 1 bis 50 Gew.-Teilen, bezogen auf die Gesamtmenge an Pigmenten, sowie Pigmente in einer Menge von 80 bis 95 Gewichtsteilen, bezogen auf den Gesamtfeststoffgehalt, sowie einen Hilfsstoff enthält, und deren Pigment ausgewählt sind aus der Gruppe bestehend aus Calciumsulfat, Calciumaluminatsulfat, Bariumsulfat, Magnesiumcarbonat, Calciumcarbonat, Kieselsäuren, Aluminiumoxide, Aluminiumhydrat, Silikaten, Titandioxid, Zinkoxid, Kaolin, Tonerde, Talkum und Siliziumdioxid und deren Hilfsstoff ausgewählt wird aus der Gruppe bestehend aus Verdickern, weiteren polymeren Bindemitteln, Co-Bindemitteln, optischen Aufhellern, Füllstoffen, Verlaufshilfsmitteln, Dispergatoren, Tensiden, Gleitmitteln, Neutralisationsmitteln, Entschäumern, Entlüftungsmitteln, Konservierungsmitteln und Farbstoffen.

Die weiteren, von den erfindungsgemäß hergestellten Polymerisaten verschiedenen, synthetischen Bindemittel sind allgemein bekannt und werden beispielsweise in D. Urban und K. Takamura, Polymer Dispersions and Their Industrial Applications, 2002 ,Wiley-VCH Verlag GmbH, Weinheim, Kap. 4.4.4 Seite 90 ff. beschrieben, auf dessen Offenbarung ausdrücklich Bezug genommen wird.

Als weitere Bindemittel in Betracht kommen Bindemittel auf natürlicher Basis, insbesondere Bindemittel auf Stärkebasis sowie von den erfindungsgemäß hergestellten Polymerisaten verschiedene, synthetische Bindemittel, insbesondere durch Emulsionspolymerisation herstellbare Emulsionspolymerisate. Unter Bindemitteln auf Stärkebasis soll in diesem Zusammenhang jegliche native, modifizierte oder abgebaute Stärke verstanden werden. Native Stärken können aus Amylose, Amylopektin oder deren Gemischen bestehen. Bei modifizierten Stärken kann es sich um oxydierte Stärke, Stärkeester oder Stärkeether handeln. Durch Hydrolyse kann das Molgewicht der Stärke verringert werden (abgebaute Stärke). Als Abbauprodukte kommen Oligosaccharide oder Dextrine in Betracht. Bevorzugte Stärken sind Getreide-, Mais- und Kartoffelstärke. Besonders bevorzugt sind Getreide- und Maisstärke, ganz besonders bevorzugt Maisstärke.

Erfindungsgemäße Papierstreichmassen können zusätzlich weitere Hilfsstoffe enthalten, z.B. Füllstoffe, Co-Bindemittel und Verdicker zur weiteren Optimierung von Viskosität und Wasserretention, optische Aufheller, Dispergatoren, Tenside, Gleitmittel (z.B. Calciumstearat und Wachse), Neutralisationsmittel (z.B. NaOH oder Ammoniumhydroxid) zur pH-Werteinstellung, Entschäumer, Entlüftungsmittel, Konservierungsmittel (z.B. Biocide), Verlaufshilfsmittel, Farbstoffe (insbesondere lösliche Farbstoffe) etc. Als Verdicker kommen neben synthetischen Polymerisaten (z.B. vernetztes Polyacrylat), insbesondere Cellulosen, vorzugsweise Carboxymethylcellulose in Betracht. Optische Aufheller sind z.B. Fluoreszens- oder Phosphoreszensfarbstoffe, insbesondere Stilbene.

Es handelt sich vorzugsweise um eine wässrige Papierstreichmasse; sie enthält Wasser insbesondere bereits durch die Zubereitungsform der Bestandteile (wässrige Polymerdispersionen, wässrige Pigment-Slurries); die gewünschte Viskosität kann durch Zugabe von weiterem Wasser eingestellt werden. Übliche Feststoffgehalte der Papierstreichmassen liegen im Bereich von 30 bis 80 Gew.-%. Der pH-Wert der Papierstreichmasse wird vorzugsweise auf Werte von 6 bis 11, insbesondere 7 bis 10 eingestellt.

Gegenstand der Erfindung ist auch mit einer erfindungsgemäßen Papierstreichmasse beschichtetes Papier oder Karton sowie ein Verfahren zum Streichen von Papier oder Karton, wobei
- eine wässrige Polymerdispersion erfindungsgemäß hergestellt wird; und
- mit dieser Polymerdispersion, mindestens einem Pigment und optionalen weiteren Hilfsstoffe eine Papierstreichmasse hergestellt wird; und die Papierstreichmasse auf mindestens eine Oberfläche von Papier oder Karton aufgebracht wird.

Die Papierstreichmasse wird vorzugsweise auf unbeschichtete Rohpapiere oder unbeschichteten Karton aufgetragen. Die Menge beträgt im Allgemeinen 1 bis 50 g, vorzugsweise 5 bis 30 g (fest, d. h. ohne Wasser oder sonstige bei 21 °C, 1 bar flüssige Lösemittel) pro Quadratmeter. Die Beschichtung kann durch übliche Auftragverfahren erfolgen, z.B. mittels Leimpresse, Filmpresse, Bladecoater, Luftbürste, Rakel, Vorhangstreichverfahren (curtain coating) oder Spray-Coater. Je nach Pigmentsystem können die wässrigen Dispersionen der wasserlöslichen Copolymere in Papierstreichmassen für den Grundstrich und/oder für den Deckstrich verwendet werden.

Erfindungsgemäße Papierstreichmassen haben gute anwendungstechnische Eigenschaften. Sie haben ein gutes Laufverhalten in Papierbeschichtungsverfahren und eine hohe Bindekraft. Die beschichteten Papiere und Kartone haben eine gute Oberflächenfestigkeit, insbesondere eine sehr hohe Nass- und Trockenrupffestigkeit. Sie sind in den üblichen Druckverfahren, wie Hochdruck, Tiefdruck, Offsetdruck, Digitaldruck, Inkjet-Druck, Flexodruck, Zeitungsdruck, Buchdruck, Sublimationsdruck, Laserdruck, elektrophotographischer Druck oder einer Kombination dieser Druckverfahren gut bedruckbar.

### Beispiele

Sofern sich aus dem Zusammenhang nichts anderes ergibt, bedeuten die Angaben in Prozent immer Gewichtsprozent. Die Angabe eines Gehalts bezieht sich auf den Gehalt in wässriger Lösung oder Dispersion. Wenn im Rahmen der Beispiele Wasser eingesetzt wurde, wurde demineralisiertes Wasser verwendet.

### Messmethoden

### Teilchengröße:

Die Teilchengröße der Teilchen der Polymerdispersion sowie die Teilchengrößenverteilung wurden mittels analytischer Ultazentrifuge (AUZ) bestimmt mit Trübungsoptik und Mie-Korrektur für transmittierte Intensitäten pro Größe. Es werden mit Trübungsdetektion alle Komponenten von 30 nm bis 5 µm Durchmesser vermessen.

Das Verfahren verwendet eine homogene Startsedimentation. Das Verfahren wurde gemäß der Richtlinien ISO 13318-1 durchgeführt, wobei das spezifische Setup in W. Mächtle, L. Börger, "Analytical Ultracentrifugation of Polymers and Nanoparticles" Kapitel 3, Springer Science und Business Media, Berlin 2006, Kapitel 3 beschrieben wird. Die Auswertung geht von einer kugelförmigen, festen Partikelform der Skelettdichte (skeletal density) aus, die durch die Comonomerzusammensetzung gegeben ist. Die Ergebnisse werden in Volumenmetrik in kugeläquivalenten Durchmessern angegeben.

Für die Messung werden die Dispersionen auf eine Konzentration von 4 g (fest)/Liter mit einer 0,05 gew.-%igen wässrigen Tensidlösung verdünnt und unter den gleichen Bedingungen vermessen.

Der Gewichtsanteil einer Teilchenpopulation ergibt sich direkt aus dem Integral aus der Messung. Nachfolgend wird für die Population der kleinen Teilchen der Anteil aller Teilchen von 36 bis 75 nm betrachtet und für die Population der großen Teilchen der Anteil aller Teilchen von 80 bis 180 nm betrachtet.

### Bestimmung der Viskosität der Dispersion:

Die Viskosität der Dispersion wurde gemäß ASTM D2196 mit einem Brookfield Viskometer mit RV Spindeln bei 100 UpM und einer Temperatur von 23°C bestimmt.

### Bestimmung der Viskosität der Streichmasse:

Die Viskosität bei hohen Scherraten wurde mit einem Hochdruck-Kapillarviskosimeter gemessen (ACAV High-Shear-Viskosimeter A2, Hersteller: ACA Systems) bestimmt. Vor der Messung wird die Probe über ein 100 µm-Sieb filtriert und anschließend ihre Dichte bestimmt. Die Messung wird bei einer Temperatur von 23°C durchgeführt.

### Feststoffgehalt:

Feststoffgehalte der Polymerdispersionen wurden bestimmt, indem 0,5 bis 1,5 g der Polymer-Polymerdispersion in einer Blechdeckel mit 4 cm Durchmesser verteilt wurde und anschließend in einem Umlufttrockenschrank bei 140°C 30 Minuten getrocknet wurde. Das Verhältnis der Masse der Probe nach Trocknung unter obigen Bedingungen zur Masse bei der Probenahme ergibt den Feststoffgehalt der Polymerdispersion.

In den Beispielen wurden folgende Einsatzstoffe verwendet:
- Emulgator A:: Natriumlaurylsulfat in Form einer 15 gew.-%igen Lösung (Disponil^{®} SDS der Fa. BASF)
- Emulgator B:: ethoxiliertes Natriumlaurylethersulfat in Form einer 28 gew.-%igen Lösung (Texapon^{®} NSO P der Fa. BASF)
- Komplexbildner:: EDTA in Form einer 2 gew.-%igen Lösung (Trilon^{®} BX der Fa. BASF)
- Saatlatex:: Polystyrolsaat in Form einer 29,7 gew.-%igen Dispersion mit ca. 30 nm Teilchengröße (bestimmt mittels analytischer Ultrazentrifuge)
- Initiator A:: 7% gew.-%ige Lösung von Natriumperoxodisulfat (NaPS)
- Initiator B:: 10% gew.-%ige Lösung von tert.-Butylhydroperoxid
- Reduktionsmittel:: 13% gew.-%ige Lösung von Acetonbisulfit
- Abgebaute Stärke:: handelsüblicher 72 gew.-%iger wässriger Glucosesirup mit einem DE-Wert (Dextroseäquivalent) von 28

Sofern nicht anders angegeben, handelte es sich beim Wasser um deionisiertes Wasser. In allen Beispielen erfolgte die Dosierung der Zuläufe in einem gleichmäßigen Mengenstrom.

### Herstellung der Emulsionspolymerisate

Die nachfolgenden Mengenangaben in pphm (parts per hundred monomer) sind auf 100 Gewichtsanteile Gesamtmonomer bezogen.

### Beispiel 1 Emulsionspolymerisation von Styrol/Butadien/Acrylsäure

Vorlage:

| | |
|---|---|
| 360,01 g | Wasser |
| 192,86 g | einer 7 gew.-%igen wässrigen Lösung von Itakonsäure (0,6 pphm) |
| 45,45 g | einer 29,7 gew.-%igen Dispersion eines Polystyrollatex mit einer mittleren Teilchengröße von 30 nm) (0,6 pphm) |
| 18,00 g | einer 15 gew.-%igen Lösung von Natriumlaurylsulfat (Emulgator A)(0,12 pphm) |
| 11,25 g | einer 2 gew.-%igen Lösung von EDTA (Komplexbildner) (0,01 pphm) |
| 4,50 g | Acrylsäure (0,2 pphm) |
| 47,48 g | Styrol (2,11 pphm) |

Zugabe:

| | |
|---|---|
| 86,79 g | einer 7% gew.-%igen Lösung von Natriumperoxodisulfat (Initiator A) (0,27 pphm) |

Zulauf 1:

| | |
|---|---|
| 90,00 g | Acrylsäure (4,0 pphm) |
| 40,18 g | einer 28 gew.-%igen Lösung von ethoxiliertem Natriumlaurylethersulfat (Emulgator B) (0,5 pphm) |
| 36,00 g | einer 15 gew.-%igen Lösung von Natriumlaurylsulfat (0,24 pphm) |
| 22,50 g | 15 gew.-%ige Natronlauge (0,15 pphm) |
| 503,69 ml | Wasser |

Zulauf 2:

| | |
|---|---|
| 1364,63 g | Styrol (60,65 pphm) |

Zulauf 3:

| | |
|---|---|
| 729,9 g | Butadien (32,44 pphm) |

Zulauf 4:

| | |
|---|---|
| 273,21 g | einer 7% gew.-%igen Lösung von Natriumperoxodisulfat (Initiator A) (0,85 pphm) |

Zulauf 5:

| | |
|---|---|
| 180,00 g | einer 10% gew.-%igen Lösung von tert.-Butylhydroperoxid als (Initiator B) (0,8 pphm) |

Zulauf 6 (Emulgatorschuss):

| | |
|---|---|
| 150,00 g | einer 15 gew.-%igen Lösung von Natriumlaurylsulfat (1,00 pphm) |

Zulauf 7:

| | |
|---|---|
| 51,75 g | einer 10% gew.-%igen Lösung von tert.-Butylhydroperoxid als (Initiator B) (0,23 pphm) |

Zulauf 8:

| | |
|---|---|
| 66,98 g | einer 13,1% gew.-%igen Lösung von Acetonbisulfit (0,39 pphm) |

In einem 6 l Druckreaktor wurden die Komponenten der Vorlage vorgelegt und gemischt. Die Vorlage wurde auf 90°C erwärmt. Bei Erreichen von 90°C wurde der Initiator A (Zugabe 1) langsam zugegeben und die Polymerisation gestartet.

Unmittelbar im Anschluss wurde mit den Zuläufen 1, 2, 3 und 4 begonnen (Zeitpunkt: 0 Minuten). Die Zuläufe 1, 2 und 3 erfolgten über einen Zeitraum von 4 Stunden.

Der Zulauf 4 erfolgte über einen Zeitraum von 4 Stunden und 15 Minuten.

Zulauf 5 wurde nach 30 Minuten nach dem Start der Zuläufe 1, 2, 3 und 4 begonnen (Zeitpunkt: 30 Minuten) und erfolgte über 3 Stunden.

Zulauf 6 wurde nach 50 Minuten nach dem Start der Zuläufe 1, 2, 3 und 4 begonnen (Zeitpunkt: 50 Minuten) und erfolgte über 20 Minuten.

15 Minuten vor dem Ende von Zuläufen 1, 2, 3 und 4 (Zeitpunkt: 225 Minuten) wird die Polymerisationstemperatur auf 100°C erhöht. Nach Beendigung der Zudosierung von Zulauf 4 wurde die Polymerisationsmischung weitere 30 Minuten gerührt. Anschließend wurde die Polymerisationsmischung auf eine Temperatur von 90°C erwärmt und danach 71,59 ml Wasser (3,19 pphm) und 15,00 g einer 15 gew.-%ige Natronlauge (0,10 pphm) zugegeben.

Die Zuläufe 7 und 8 wurden danach gestartet und erfolgten über weitere 2 Stunden. Nach Ende der Zuläufe 7 und 8 wurde die Polymerisationsmischung auf Raumtemperatur gekühlt, und mit 144,00 g 15 gew.-%iger Natronlauge (0,96 pphm) versetzt.

Der Feststoffgehalt der Dispersion betrug 53 Gew.-%.

Die Polymerdispersion wurde mittel analytischer Ultrazentrifuge untersucht:
Bimodale Teilchengrößenverteilung:
Die kleinere Teilchenpopulation hatte ihr Peak-Maximum bei 55 nm. Der Anteil am Gesamtpolymer betrug 20 Gew.-%.
Die größere Teilchenpopulation hatte ihr Peak-Maximum bei 117 nm. Der Anteil am Gesamtpolymer betrug 80 Gew.-%

### Beispiel 2 (verzögerte Butadienzugabe)

Die Emulsionspolymerisation wurde wie in Beispiel 1 durchgeführt, mit dem Unterschied, dass Zulauf 3 erst 30 Minuten nach dem Start der Zuläufe 1, 2 und 4 gestartet wurde (Zeitpunkt: 30 Minuten) und über 3,5 Stunden erfolgte.

Zulauf 6 wurde 60 Minuten nach dem Start der Zuläufe 1, 2 und 4 begonnen (Zeitpunkt: 60 Minuten) und erfolgte über 20 Minuten. Im Zulauf 1 wurde eine erhöhte Natronlaugemenge eingesetzt (0,25 pphm).

Der Feststoffgehalt der Dispersion betrug 53 Gew.-%.

Die Polymerdispersion wurde mittel analytischer Ultrazentrifuge untersucht:
Bimodale Teilchengrößenverteilung:
Die kleinere Teilchenpopulation hatte ihr Peak-Maximum bei 50 nm. Der Anteil am Gesamtpolymer betrug 27 Gew.-%.
Die größere Teilchenpopulation hatte ihr Peak-Maximum bei 120 nm. Der Anteil am Gesamtpolymer betrug 73 Gew.-%.

### Beispiel 3 (verzögerte Butadienzugabe)

Die Emulsionspolymerisation wurde wie in Beispiel 1 durchgeführt, mit dem Unterschied, dass Zulauf 3 erst 30 Minuten nach dem Start der Zuläufe 1, 2 und 4 gestartet wurde (Zeitpunkt: 30 Minuten) und über 3,5 Stunden erfolgte.

Zulauf 6 wurde 40 Minuten nach dem Start der Zuläufe 1, 2 und 4 begonnen (Zeitpunkt: 40 Minuten) und erfolgte über 20 Minuten. Im Zulauf 1 wurde eine erhöhte Natronlaugemenge eingesetzt (0,25 pphm).

Der Feststoffgehalt der Dispersion betrug 53 Gew.-%.

Die Polymerdispersion wurde mittel analytischer Ultrazentrifuge untersucht:
Bimodale Teilchengrößenverteilung:
Die kleinere Teilchenpopulation hatte ihr Peak-Maximum bei 56 nm. Der Anteil am Gesamtpolymer betrug 24 Gew.-%.

Die größere Teilchenpopulation hatte ihr Peak-Maximum bei 118 nm. Der Anteil am Gesamtpolymer betrug 76 Gew.-%.

### Beispiel 4

Die Emulsionspolymerisation wurde wie in Beispiel 1 durchgeführt, mit dem Unterschied, dass mit

Zulauf 6 erst 40 Minuten nach dem Start der Zuläufe 1, 2, 3 und 4 begonnen wurde (Zeitpunkt: 40 Minuten) und über 20 Minuten dosiert wurde. Im Zulauf 1 wurde eine erhöhte Natronlaugemenge eingesetzt (0,25 pphm).

Der Feststoffgehalt der Dispersion betrug 53 Gew.-%.

Die Polymerdispersion wurde mittel analytischer Ultrazentrifuge untersucht:
Bimodale Teilchengrößenverteilung:
Die kleinere Teilchenpopulation hatte ihr Peak-Maximum bei 58 nm. Der Anteil am Gesamtpolymer betrug 30 Gew.-%.

Die größere Teilchenpopulation hatte ihr Peak-Maximum bei 118 nm. Der Anteil am Gesamtpolymer betrug 70 Gew.-%.

### Beispiel 5

Die Emulsionspolymerisation wurde wie in Beispiel 1 durchgeführt, mit dem Unterschied, dass als Zulauf 6
90,00 g einer 15 gew.-%igen Lösung Natriumlaurylsulfat (0,6 pphm) über einen Zeitraum von 20 Minuten zudosiert wurde.

Der Feststoffgehalt der Dispersion betrug 53 Gew.-%.

Die Polymerdispersion wurde mittel analytischer Ultrazentrifuge untersucht:
Bimodale Teilchengrößenverteilung:
Die kleinere Teilchenpopulation hatte ihr Peak-Maximum bei 56 nm. Der Anteil am Gesamtpolymer betrug 16 Gew.-%.

Die größere Teilchenpopulation hatte ihr Peak-Maximum bei 116 nm. Der Anteil am Gesamtpolymer betrug 84 Gew.-%.

### Beispiel 6

Die Emulsionspolymerisation wurde wie in Beispiel 1 durchgeführt, mit dem Unterschied, dass als Saatlatex in der Vorlage 75,75 g einer 29,7 gew.-%igen Dispersion eines Polystyrollatex mit einer mittleren Teilchengröße von 30 nm) (1,0 pphm) eingesetzt wurden.

Der Feststoffgehalt der Dispersion betrug 53 Gew.-%.

Die Polymerdispersion wurde mittel analytischer Ultrazentrifuge untersucht:
Bimodale Teilchengrößenverteilung:
Die kleinere Teilchenpopulation hatte ihr Peak-Maximum bei 50 nm (. Der Anteil am Gesamtpolymer betrug 10 Gew.-%

Die größere Teilchenpopulation hatte ihr Peak-Maximum bei 100 nm. Der Anteil am Gesamtpolymer betrug 90 Gew.-%

### Vergleichsbeispiel V1 (ohne Emulgatorschuss)

Vorlage:

| | |
|---|---|
| 360,01 g | Wasser |
| 11,25 g | einer 2 gew.-%igen Lösung von EDTA (Komplexbildner) (0,01 pphm) |
| 18,00 g | einer 15 gew.-%igen Lösung von Natriumlaurylsulfat (Emulgator A) (0,12 pphm) |
| 192,86 g | einer 7 gew.-%igen wässrigen Lösung von Itakonsäure (0,6 pphm) |
| 45,45 g | einer 29,7 gew.-%igen Dispersion eines Polystyrollatex mit einer mittleren Teilchengröße von 30 nm) (0,6 pphm) |
| 4,50 g | Acrylsäure (0,2 pphm) |
| 47,48 g | Styrol (2,11 pphm) |

Zugabe:

| | |
|---|---|
| 86,79 g | einer 7% gew.-%ige Lösung von Natriumperoxodisulfat (Initiator A) (0,27 pphm) |

Zulauf 1:

| | |
|---|---|
| 90,00 g | Acrylsäure (4,0 pphm) |

| | |
|---|---|
| 40,18 g | einer 28 gew.-%igen Lösung von ethoxiliertem Natriumlaurylethersulfat (Emulgator B) (0,5 pphm) |
| 36,00 g | einer 15 gew.-%igen Lösung von Natriumlaurylsulfat (0,24 pphm) |
| 37,5 g | 15 gew.-%ige Natronlauge (0,15 pphm) |
| 597,91 ml | Wasser |

Zulauf 2:

| | |
|---|---|
| 1252,13 g | Styrol (55,65 pphm) |

Zulauf 3:

| | |
|---|---|
| 842,4 g | Butadien (37,44 pphm) |

Zulauf 4:

| | |
|---|---|
| 273,21 g | einer 7 gew.-%ige Lösung von Natriumperoxodisulfat (Initiator A) (0,85 pphm) |

Zulauf 5:

| | |
|---|---|
| 180,00 g | einer 10 gew.-%igen Lösung von tert.-Butylhydroperoxid als (Initiator B) (0,8 pphm) |

Zulauf 6:

| | |
|---|---|
| 51,75 g | einer 10 gew.-%igen Lösung von tert.-Butylhydroperoxid als (Initiator B) (0,23 pphm) |

Zulauf 7:

| | |
|---|---|
| 66,98 g | einer 13,1% gew.-%igen Lösung von Acetonbisulfit (0,39 pphm) |

In einem 6 l Druckreaktor wurden die Komponenten der Vorlage vorgelegt und gemischt. Die Vorlage wurde auf 90°C erwärmt. Bei Erreichen von 90°C wurde der Initiator A (Zugabe 1) langsam zugegeben und die Polymerisation gestartet.

Unmittelbar im Anschluss wurde mit den Zuläufen 1, 2, und 4 begonnen (Zeitpunkt: 0 Minuten). Die Zuläufe 1 und 2 erfolgten über einen Zeitraum von 4 Stunden.

Zulauf 3 startete 30 Minuten nach dem Start der Zuläufe 1, 2 und 4 (Zeitpunkt: 30 Minuten) und erfolgte über 3,5 Stunden.

Der Zulauf 4 erfolgte über einen Zeitraum von 4 Stunden und 15 Minuten.

Zulauf 5 wurde nach 30 Minuten nach dem Start der Zuläufe 1, 2 und 4 begonnen (Zeitpunkt: 30 Minuten) und erfolgte über 3 Stunden.

15 Minuten vor dem Ende der Zuläufe 1, 2 und 3 (Zeitpunkt: 225 Minuten) wurde die Polymerisationstemperatur auf 100°C erhöht. Nach Beendigung der Zudosierung von Zulauf 4 wurde die Polymerisationsmischung weitere 30 Minuten gerührt. Anschließend wurde die Polymerisationsmischung auf eine Temperatur von 90°C erwärmt und danach 71,59 ml Wasser und 15,00 g einer 15 gew.-%ige Natronlauge (0,10 pphm) zugegeben.

Die Zuläufe 6 und 7 wurden danach gestartet und erfolgten über weitere 2 Stunden. Nach Ende der Zuläufe 6 und 7 wurde die Polymerisationsmischung auf Raumtemperatur gekühlt und anschließend mit 144,00 g 15 gew.-%iger Natronlauge (0,96 pphm) versetzt.

Es wurde eine monomodale Dispersion erhalten. Der Feststoffgehalt der Dispersion betrug 53 Gew.-%.

Die mittlere Teilchengröße D₅₀, (bestimmt mittels AUZ) der Dispersionspartikel: 128 nm.

### Vergleichsbeispiel V2 (ohne Emulgatorschuss)

Vorlage:

| | |
|---|---|
| 360,01 g | Wasser |
| 11,25 g | einer 2 gew.-%igen Lösung von EDTA (Komplexbildner) (0,01 pphm) |
| 18,00 g | einer 15 gew.-%igen Lösung von Natriumlaurylsulfat (Emulgator A) (0,12 pphm) |
| 192,86 g | einer 7 gew.-%igen wässrigen Lösung von Itakonsäure (0,6 pphm) |
| 189,39 g | einer 29,7 gew.-%igen Dispersion eines Polystyrollatex mit einer mittleren Teilchengröße von 30 nm) (2,50 pphm) |
| 4,50 g | Acrylsäure (0,2 pphm) |
| 47,48 g | Styrol (2,11 pphm) |

Zugabe:

| | |
|---|---|
| 86,79 g | einer 7% gew.-%ige Lösung von Natriumperoxodisulfat (Initiator A) (0,27 pphm) |

Zulauf 1:

| | |
|---|---|
| 90,00 g | Acrylsäure (4,0 pphm) |
| 40,18 g | einer 28 gew.-%igen Lösung von ethoxiliertem Natriumlaurylethersulfat (Emulgator B) (0,5 pphm) |
| 36,00 g | einer 15 gew.-%igen Lösung von Natriumlaurylsulfat (0,24 pphm) |
| 37,5 g | 15 gew.-%ige Natronlauge (0,25 pphm) |
| 547,96 ml | Wasser |

Zulauf 2:

| | |
|---|---|
| 1252,13 g | Styrol (55,65 pphm) |

Zulauf 3:

| | |
|---|---|
| 842,4 g | Butadien (37,44 pphm) |

Zulauf 4:

| | |
|---|---|
| 273,21 g | einer 7 gew.-%ige Lösung von Natriumperoxodisulfat (Initiator A) (0,85 pphm) |

Zulauf 5:

| | |
|---|---|
| 180,00 g | einer 10 gew.-%igen Lösung von tert.-Butylhydroperoxid als (Initiator B) (0,8 pphm) |

Zulauf 6:

| | |
|---|---|
| 51,75 g | einer 10 gew.-%igen Lösung von tert.-Butylhydroperoxid als (Initiator B) (0,23 pphm) |

Zulauf 7:

| | |
|---|---|
| 66,98 g | einer 13,1% gew.-%igen Lösung von Acetonbisulfit (0,39 pphm) |

In einem 6 l Druckreaktor wurden die Komponenten der Vorlage vorgelegt und gemischt. Die Vorlage wurde auf 90°C erwärmt. Bei Erreichen von 90°C wurde der Initiator A (Zugabe 1) langsam zugegeben und die Polymerisation gestartet.

Unmittelbar im Anschluss wurde mit den Zuläufen 1, 2, und 4 begonnen (Zeitpunkt: 0 Minuten). Die Zuläufe 1 und 2 erfolgten über einen Zeitraum von 4 Stunden.

Zulauf 3 startete 30 Minuten nach dem Start der Zuläufe 1, 2 und 4 (Zeitpunkt: 30 Minuten) und erfolgte über 3,5 Stunden.

Der Zulauf 4 erfolgte über einen Zeitraum von 4 Stunden und 15 Minuten.

Zulauf 5 wurde nach 30 Minuten nach dem Start der Zuläufe 1, 2 und 4 begonnen (Zeitpunkt: 30 Minuten) und erfolgte über 3 Stunden.

15 Minuten vor dem Ende der Zuläufe 1, 2 und 3 (Zeitpunkt: 225 Minuten) wurde die Polymerisationstemperatur auf 100°C erhöht. Nach Beendigung der Zudosierung von Zulauf 4 wurde die Polymerisationsmischung weitere 30 Minuten gerührt. Anschließend wurde die Polymerisationsmischung auf eine Temperatur von 90°C erwärmt und danach 71,59 ml Wasser und 15,00 g einer 15 gew.-%ige Natronlauge (0,10 pphm) zugegeben.

Die Zuläufe 6 und 7 wurden danach gestartet und erfolgten über weitere 2 Stunden. Nach Ende der Zuläufe 6 und 7 wurde die Polymerisationsmischung auf Raumtemperatur gekühlt und anschließend mit 129,00 g 15 gew.-%iger Natronlauge (0,86 pphm) versetzt.

Die Dispersion ist koaguliert.

**Tabelle 1: Start der Dosierung des Emulgatorschuss im Hinblick auf Zeitpunkt und zudosierter Monomermenge der einzelnen Beispiele**

| Bsp. | Beginn "Emulgatorschuss" nach x min | Start ab y % Gesamtdosierzeit der Monomere | Start ab z % Gesamtmonomermenge* | "Emulgatorschuss" x fache der Dosierrate in P1 |
|---|---|---|---|---|
| 1 | 50 | 20,83 | 20,83 | 16,66 |
| 2 | 60 | 25 | 21,42 | 16,66 |
| 3 | 40 | 16,66 | 15,42 | 16,66 |
| 4 | 40 | 16,66 | 16,66 | 16,66 |
| 5 | 50 | 20,83 | 20,83 | 10 |
| 6 | 50 | 20,83 | 20,83 | 16,66 |
| V1 | ohne | | | |

| | | | | |
|---|---|---|---|---|
| * ohne Monomere in der Vorlage | | | | |

### Herstellung der Streichmassen S1 bis S6 und SV1

Mit den aus den Beispielen erhaltenen Dispersionen wurden Streichmassen hergestellt, bestehend aus 100 Gewichtsteilen präzipitiertem Calciumcarbonat (Opacarb A 40), 9,5 Gewichtsteilen Bindemittel (Beispieldispersion fest), 0,5 Gewichtsteilen Calciumstearat (Ombrelub), 0,25 Gewichtsteilen Verdicker (Sterocoll FS) und 0,1 Teilen Dispergiermittel ( Sokalan CP 10). Alle Gewichtsangaben beziehen sich auf den jeweiligen Feststoffgehalt der Komponenten.

Der Feststoffgehalt der Streichmasse betrug 66 Gew.-%, der pH-Wert lag bei 8,8.

Die Viskosität bei hohen Scherraten wurde mit einem Kapillarviskosimeter gemessen (ACAV)

**Tabelle 2: Viskosität der Streichmasse bei hohen Scherraten**

| Bsp. | Dispersion Bsp. | Viskosität bei einer Scherrate von 500.000 s⁻¹ [mPa s] | Viskosität bei einer von Scherrate 620.000 s⁻¹ [mPa s] |
|---|---|---|---|
| S1 | 1 | 118 | 109 |
| S2 | 2 | 115 | 114 |
| S3 | 3 | 124 | 123 |
| S4 | 4 | 114 | 108 |
| S5 | 5 | 115 | 110 |
| S6 | 6 | 106 | 100 |
| SV1 | V1 | 150 | nicht messbar |

Wie aus der Tabelle ersichtlich, weisen alle erfindungsgemäßen Streichmassen S1 bis S6 formuliert mit den erfindungsgemäßen Dispersionen eine geringe Viskosität bei hohen Scherraten auf und haben somit ein sehr gutes rheologisches Verhalten. Die mit der monomodalen Dispersion des Vergleichsbeispiels V1 formulierte Streichmasse ergab deutlich höhere Viskositäten und ist bei einer Scherrate von 620.000 s⁻¹ nicht mehr messbar.

## Patentansprüche

1. Verfahren zur Herstellung einer wässrigen Polymerdispersion, die eine polymodale Teilchenverteilung der Polymerteilchen aufweist mit einer ersten Population großer Polymerteilchen und einer zweiten Population kleiner Polymerteilchen, durch radikalisch initiierte wässrige Emulsionspolymerisation, **dadurch gekennzeichnet, dass** man in einem wässrigen Medium
| | |
|---|---|
| (a) 40 bis 75 Gew.-Teile | mindestens einer vinylaromatischen Verbindung, |
| (b) 24,9 bis 59,9 Gew.-Teile | mindestens eines konjugierten aliphatischen Diens, |
| (c) 0,1 bis 10 Gew.-Teile | mindestens eines Säuregruppen enthaltenden Monomers und |
| (d) 0 bis 20 Gew.-Teile | mindestens eines sonstigen monoethylenisch ungesättigten Monomers, |
wobei sich die Mengen der Monomeren (a) bis (d) auf 100 Gew.-Teile aufsummieren,
nach einem Monomerzulaufverfahren polymerisiert, mit der Maßgabe, dass man
- Monomere und Emulgator stetig dosiert und
- anschließend an eine Periode P1, wenn 15 bis 30 % der Gesamtdosierzeit der Monomere verstrichen ist und 15 bis 30 Gew.-% der Gesamtmonomermenge zudosiert sind, die Dosierrate des Emulgators für eine Periode P2, die längstens 30 Minuten dauert, auf das 10 bis 100-fache der Durchschnittsdosierrate des Emulgators der Periode P1 erhöht.

2. Verfahren nach Anspruch 1, **dadurch gekennzeichnet, dass** die vinylaromatische Verbindung Styrol und/oder Methylstyrol und das konjugierte aliphatische Dien 1,3-Butadien und/oder Isopren ist.

3. Verfahren nach Anspruch 1 oder 2, **dadurch gekennzeichnet, dass** die Polymerisation in einer Vorlage, die bis zu 20 Gew.-Teile der Gesamtmonomere enthält, initiiert wird und anschließend Monomere und Emulgator stetig dosiert werden.

4. Verfahren nach einem der Ansprüche 1 bis 3, **dadurch gekennzeichnet, dass** der Emulgator ausgewählt wird unter unter Alkali- und Ammoniumsalzen von C₈-C₂₂-Alkylsulfaten und von Schwefelsäurehalbestern ethoxylierter C₁₂-C₁₈-Alkanole (EO-Grad: 2 bis 40) und von Schwefelsäurehalbestern ethoxylierter C₄-C₉-Alkyl-phenole (EO-Grad: 10 bis 40), und Bis(phenylsulfonsäure)ether bzw. deren Alkali- oder Ammoniumsalze, die an einem oder beiden aromatischen Ringen eine C₄-C₂₄-Alkylgruppe tragen.

5. Verfahren nach einem der Ansprüche 1 bis 5, **dadurch gekennzeichnet, dass** der Emulgator und mindestens ein Monomer zusammen als Mischung dosiert werden.

6. Verfahren nach einem der Ansprüche 1 bis 4, **dadurch gekennzeichnet, dass** 0,1 bis 5 Gew.-Teile Emulgator bezogen auf 100 Gew.-Teile Monomere in Mischung mit mindestens einem Monomer stetig dosiert werden.

7. Verfahren nach einem der Ansprüche 1 bis 6, **dadurch gekennzeichnet, dass** während der Periode P2 die Dosierrate des Emulgators das 20 bis 90-fache der Durchschnittsdosierrate des Emulgators der Periode P1 beträgt.

8. Verfahren nach einem der Ansprüche 1 bis 7, **dadurch gekennzeichnet, dass** man in Gegenwart mindestens eines anorganischen Peroxids sowie mindestens eines organischen Peroxids polymerisiert.

9. Verfahren nach einem der Ansprüche 1 bis 8, **dadurch gekennzeichnet, dass** während des Monomerzulaufs kein Reduktionsmittel anwesend ist, welches mit den organischen oder anorganischen Peroxiden ein Red/Ox-Initiatorsystem bilden kann.

10. Verfahren nach einem der Ansprüche 1 bis 9, **dadurch gekennzeichnet, dass** man bei einer Temperatur im Bereich von ≥ 80°C bis ≤ 115°C polymerisiert.

11. Verfahren nach einem der Ansprüche 1 bis 10, **dadurch gekennzeichnet, dass** die Polymerisation in einer Vorlage, die bis zu 2 Gew.-Teile von feinteiligem Polystyrol bezogen auf 100 Gew.-Teile Gesamtmonomere enthält, initiiert wird und anschließend Monomere und Emulator stetig dosiert werden.

12. Verfahren nach einem der Ansprüche 1 bis 11, **dadurch gekennzeichnet, dass** während der Polymerisation kein Kettenübertragungsmittel ausgewählt unter aliphatischen und/oder araliphatischen Halogenverbindungen, organischen Thioverbindungen und substituierten Thiole eingesetzt wird.

13. Wässrige Polymerdispersion erhältlich durch ein Verfahren gemäß einem der Ansprüche 1 bis 12.

14. Wässrige Polymerdispersion nach Anspruch 13, **dadurch gekennzeichnet, dass** der Anteil der ersten Population 60 bis 95 Gew.-% und der Anteil der zweiten Population 5 bis 40 Gew.-% beträgt, bezogen auf das Gesamtpolymer der Dispersion.

16. Verwendung der wässrigen Polymerdispersion nach Anspruch 13 oder 14 als Bindemittel, Klebstoff, Schlichtemittel für Fasern, zur Herstellung von Überzügen oder zur Herstellung von Papierstreichmassen.

17. Papierstreichmasse enthaltend (i) anorganische Pigmente und (ii) eine wässrige Polymerdispersion nach Anspruch 13 oder 14 sowie gegebenenfalls weitere Hilfsstoffe.

18. Mit einer Papierstreichmasse gemäß Anspruch 17 beschichtetes Papier oder Karton.

19. Verfahren zum Streichen von Papier oder Karton, wobei
- eine wässrige Polymerdispersion nach einem der Ansprüche 13 oder 14 zur Verfügung gestellt wird; und
- mit der wässrigen Polymerdispersion, mindestens einem Pigment und optionalen weiteren Hilfsstoffen eine Papierstreichmasse hergestellt wird; und
- die Papierstreichmasse auf mindestens eine Oberfläche von Papier oder Karton aufgebracht wird.

## Claims

1. A process for preparing an aqueous polymer dispersion having a polymodal particle distribution of the polymer particles, with a first population of large polymer particles and a second population of small polymer particles, by radically initiated aqueous emulsion polymerization, which comprises polymerizing
(a) 40 to 75 parts by weight of at least one vinylaromatic compound,
(b) 24.9 to 59.9 parts by weight of at least one conjugated aliphatic diene,
(c) 0.1 to 10 parts by weight of at least one monomer containing acid groups, and
(d) 0 to 20 parts by weight of at least one other monoethylenically unsaturated monomer,
where the amounts of the monomers (a) to (d) add up to 100 parts by weight,
in an aqueous medium by a monomer feed process, with the proviso that
- monomers and emulsifier are metered continuously and
- following a period P1, when 15 to 30% of the total monomer metering time has elapsed and 15 to 30 wt% of the total monomer amount has been metered in, the metering rate of the emulsifier is increased for a period P2 lasting no longer than 30 minutes to 10 to 100 times the average metering rate of the emulsifier in the period P1.

2. The process according to claim 1, wherein the vinylaromatic compound is styrene and/or methylstyrene and the conjugated aliphatic diene is 1,3-butadiene and/or isoprene.

3. The process according to claim 1 or 2, wherein the polymerization is initiated in an initial charge which contains up to 20 parts by weight of the total monomers and subsequently monomers and emulsifier are metered continuously.

4. The process according to any of claims 1 to 3, wherein the emulsifier is selected from alkali metal salts and ammonium salts of C₈-C₂₂ alkyl sulfates and of sulfuric monoesters with ethoxylated C₁₂-C₁₈ alkanols (EO degree: 2 to 40) and of sulfuric monoesters with ethoxylated C₄-C₉ alkylphenols (EO degree: 10 to 40), and from bis(phenylsulfonic acid) ethers and/or the alkali metal salts or ammonium salts thereof which carry a C₄-C₂₄ alkyl group on one or both aromatic rings.

5. The process according to any of claims 1 to 5, wherein the emulsifier and at least one monomer are metered together as a mixture.

6. The process according to any of claims 1 to 4, wherein 0.1 to 5 parts by weight of emulsifier per 100 parts by weight of monomers are metered continuously in a mixture with at least one monomer.

7. The process according to any of claims 1 to 6, wherein during the period P2 the metering rate of the emulsifier is 20 to 90 times the average metering rate of the emulsifier in the period P1.

8. The process according to any of claims 1 to 7, wherein polymerization takes place in the presence of at least one inorganic peroxide and also at least one organic peroxide.

9. The process according to any of claims 1 to 8, wherein no reducing agent that can form a red/ox initiator system with the organic or inorganic peroxides is present during the monomer feed.

10. The process according to any of claims 1 to 9, wherein polymerization takes place at a temperature in the range from ≥ 80°C to ≤ 115°C.

11. The process according to any of claims 1 to 10, wherein the polymerization is initiated in an initial charge containing up to 2 parts by weight of finely divided polystyrene per 100 parts by weight of total monomers and then monomers and emulsifier are metered continuously.

12. The process according to any of claims 1 to 11, wherein no chain transfer agent selected from aliphatic and/or araliphatic halogen compounds, organic thio compounds and substituted thiols is used during the polymerization.

13. An aqueous polymer dispersion obtainable by a process according to any of claims 1 to 12.

14. The aqueous polymer dispersion according to claim 13, wherein the fraction of the first population is 60 to 95 wt% and the fraction of the second population is 5 to 40 wt%, based on the total polymer of the dispersion.

16. The use of the aqueous polymer dispersion according to claim 13 or 14 as a binder, adhesive, fiber sizing agent, for producing coatings or for producing paper coating slips.

17. A paper coating slip comprising (i) inorganic pigments and (ii) an aqueous polymer dispersion according to claim 13 or 14 and also optionally further auxiliaries.

18. Paper or card coated with a paper coating slip according to claim 17.

19. A method for coating paper or card, by
- providing an aqueous polymer dispersion according to either of claims 13 and 14; and
- producing a paper coating slip with the aqueous polymer dispersion, at least one pigment and optional further auxiliaries; and
- applying the paper coating slip to at least one surface of paper or card.

## Revendications

1. Procédé de fabrication d'une dispersion aqueuse de polymère, qui présente une répartition polymodale des particules de polymère avec une première population de grandes particules de polymère et une deuxième population de petites particules de polymère, par polymérisation en émulsion aqueuse initiée par des radicaux libres, **caractérisé en ce que**, dans un milieu aqueux,
(a) 40 à 75 parties en poids d'au moins un composé vinylaromatique,
(b) 24,9 à 59,9 parties en poids d'au moins un diène aliphatique conjugué,
(c) 0,1 à 10 parties en poids d'au moins un monomère contenant des groupes acides ; et
(d) 0 à 20 parties en poids d'au moins un autre monomère à insaturation monoéthylénique,
les quantités des monomères (a) à (d) s'additionnant à 100 parties en poids,
sont polymérisées selon un procédé d'alimentation en monomères, à condition
- que les monomères et l'émulsifiant soient dosés en continu et
- qu'après une période P1, lorsque 15 à 30 % du temps total de dosage des monomères s'est écoulé et que 15 à 30 % en poids de la quantité totale de monomères a été ajoutée, la vitesse de dosage de l'émulsifiant pour une période P2, qui dure au plus 30 minutes, est augmentée de 10 à 100 fois la vitesse de dosage moyenne de l'émulsifiant de la période P1.

2. Procédé selon la revendication 1, **caractérisé en ce que** le composé vinylaromatique est le styrène et/ou le méthylstyrène et le diène aliphatique conjugué est le 1,3-butadiène et/ou l'isoprène.

3. Procédé selon la revendication 1 ou 2, **caractérisé en ce que** la polymérisation est initiée dans une préparation contenant jusqu'à 20 parties en poids de monomères totaux, puis les monomères et l'émulsifiant sont dosés en continu.

4. Procédé selon l'une quelconque des revendications 1 à 3, **caractérisé en ce que** l'émulsifiant est choisi parmi les sels alcalins et les sels d'ammonium d'alkylsulfates en C₈-C₂₂ et de semi-esters d'acide sulfurique d'alcanols en C₁₂-C₁₈ éthoxylés (degré EO : 2 à 40) et les semi-esters d'acide sulfurique d'alkylphénols en C₄-C₉ éthoxylés (degré EO : 10 à 40), et les éthers d'acide bis (phénylsulfonique) ou leurs sels de métaux alcalins ou d'ammonium, qui portent un groupe alkyle en C₄-C₂₄ sur l'un des cycles aromatiques ou sur les deux.

5. Procédé selon l'une quelconque des revendications 1 à 5, **caractérisé en ce que** l'émulsifiant et au moins un monomère sont dosés ensemble sous forme de mélange.

6. Procédé selon l'une quelconque des revendications 1 à 4, **caractérisé en ce que** l'on dose en continu de 0,1 à 5 parties en poids d'émulsifiant par rapport à 100 parties en poids de monomères en mélange avec au moins un monomère.

7. Procédé selon l'une quelconque des revendications 1 à 6, **caractérisé en ce que**, pendant la période P2, la vitesse de dosage de l'émulsifiant est de 20 à 90 fois la vitesse de dosage moyenne de l'émulsifiant de la période P1.

8. Procédé selon l'une quelconque des revendications 1 à 7, **caractérisé en ce que** l'on polymérise en présence d'au moins un peroxyde inorganique ainsi que d'au moins un peroxyde organique.

9. Procédé selon l'une quelconque des revendications 1 à 8, **caractérisé en ce que**, pendant l'alimentation en monomères, il n'y a pas d'agent réducteur présent qui puisse former un système initiateur réd/ox avec les peroxydes organiques ou inorganiques.

10. Procédé selon l'une quelconque des revendications 1 à 9, **caractérisé en ce que** l'on polymérise à une température dans la plage de ≥ 80 °C à ≤ 115 °C.

11. Procédé selon l'une quelconque des revendications 1 à 10, **caractérisé en ce que** la polymérisation est initiée dans une préparation contenant jusqu'à 2 parties en poids de polystyrène finement divisé par rapport à 100 parties en poids de monomères totaux, puis les monomères et l'émulsifiant sont dosés en continu.

12. Procédé selon l'une quelconque des revendications 1 à 11, **caractérisé en ce qu'**aucun agent de transfert de chaîne choisi parmi les composés halogénés aliphatiques et/ou araliphatiques, les composés thio organiques et les thiols substitués n'est utilisé pendant la polymérisation.

13. Dispersion aqueuse de polymère pouvant être obtenue par un procédé selon l'une quelconque des revendications 1 à 12.

14. Dispersion aqueuse de polymère selon la revendication 13, **caractérisée en ce que** la proportion de la première population est de 60 à 95 % en poids et la proportion de la deuxième population est de 5 à 40 % en poids, par rapport au polymère total de la dispersion.

16. Utilisation de la dispersion aqueuse de polymère selon la revendication 13 ou 14 en tant que liant, adhésif, agent d'encollage pour fibres, pour la fabrication de revêtements ou pour la fabrication de masses de couchage pour papier.

17. Masse de couchage pour papier contenant (i) des pigments inorganiques et (ii) une dispersion aqueuse de polymère selon la revendication 13 ou 14, ainsi qu'éventuellement d'autres adjuvants.

18. Papier ou carton revêtu d'une masse de couchage pour papier selon la revendication 17.

19. Procédé pour enduire du papier ou du carton, dans lequel
- une dispersion aqueuse de polymère selon l'une quelconque des revendications 13 ou 14 est mise à disposition ; et
- une masse de couchage pour papier est fabriquée avec la dispersion aqueuse de polymère, au moins un pigment et éventuellement d'autres adjuvants ; et
- la masse de couchage pour papier est appliquée sur au moins une surface de papier ou de carton.
